# EUROPEAN PATENT SPECIFICATION

(11) **EP 3 411 268 B1**
(45) Date of publication and mention of the grant of the patent: **27.11.2019**
(21) Application number: 16791068.6
(22) Date of filing: 12.09.2016
(51) Int. Cl.: B60R 9/042, B60P 1/44

(54) **A DEVICE FOR SUPPORT OF LOADS**
LASTENSTÜTZVORRICHTUNG
DISPOSITIF DE SUPPORT DE CHARGES

(30) Priority: 05.02.2016 NO 20160195
(43) Date of publication of application: 12.12.2018
(73) Proprietor: HPG AS, 7037 Trondheim (NO)
(72) Inventor: DIMMEN, Helge Asteson, 7050 Trondheim (NO); TANDBERG, Teo Ranaas, N-1444 Drøbak (NO); JØRGENSEN, Pål, Bierman, 7030 Trondheim (NO); RINGDALEN, Martin, Gudem, N-7020 Trondheim (NO)
(74) Representative: Onsagers AS
(86) International application number: PCT/IB2016/001277
(87) International publication number: WO 2017/134480

(56) References cited:
- US-A- 4 260 314
- US-A1- 2006 133 914
- US-B1- 8 322 580

## Description

The present application relates generally to a raising and lowering device for supporting of load, where the load is moved from one level to another level, while the load is kept substantially parallel to a plane of an initial position of the load.

More particularly, the present invention relates to a raising and lowering device for vehicles, cabinets or similar, wherein the raising and lowering device is used in conjunction with loading and unloading, and securing of load.

Often ordinary vehicles are used to transport items that are too large to fit in the compartment of the vehicle or the interior of the vehicle. A rack or a roof rack is therefore used to attach and secure objects such as skis, bicycles or luggage on the roof of a vehicle. The objects must be lifted up to the height of the roof of the vehicle and lifted down again. Since this can be difficult, especially for heavy and bulky objects, roof racks that include auxiliary lifting mechanisms have been described in, for example, DE 42 29 762, EP 568 855 and GB 2,073,686.

US 5,544,796 relates to a roof rack for vehicles, where the roof rack comprises two parallel tracks having a roof section and a pivotal auxiliary section. For loading or unloading articles, the auxiliary sections are positioned to extend outward for forming a continuous, rigid track. Sleighs can be displaced along these tracks. The sleighs are guided along the track, such that they are not tilted but retain their orientation during displacement.

EP 1619079 A2 relates to a load carrying device mounted on a vehicle roof, where the load carrying device comprises a first part fixed to the vehicle and a second portion to which load may be connected to, where the second part is movable relative to the first part through a guiding system, between a loading position and a driving position.

CA 2490751 A1 relates to a luggage carrier for a vehicle, which luggage carrier comprises a carriage that is connected to and configured to follow a guide member along a first path. The carriage includes a movable support member configured to receive an object to be carried by the luggage carrier and an elevating system for elevating the supporting element along a second path between a raised and lowered position.

US 8.322.580 B1 relates to a retractable cargo carrying device that can be mounted on the top of a trailer such as a horse trailer. The device is provided underneath with a telescoping rail system that secures to the top of the trailer and to a storage box of the device. This telescoping rail system allows the storage box to be lowered near to the ground so that items can be easily placed in the storage box from the ground. Once the storage box is loaded, it can then be retracted back onto the top of the trailer for transport. The storage box has a pivoting attachment to the telescoping rail system that maintains the storage box in a level position at all times, even when lowering and retracting the box relative to the trailer.

US 4.260.314 A relates to a roof top carrier for vehicles having a frame to be supported by the roof of a vehicle, a transport mechanism supported by the frame, a housing supported by the transport mechanism for transporting the housing away from its stored position on the roof down to the side of the vehicle to its loading and unloading position and back again to its stored position without any substantial change of the vertical or horizontal orientation of the housing.

US 2006/133914 A1 relates to a roof top carrier, where the roof top carrier includes a guide member mounted to the roof of a vehicle, wherein the guide member defines a substantially horizontal first path, and a carriage movably mounted to and configured to follow the guide member along the first path. The carriage comprises a moveable support member configured to receive an object to be carried by the carrier. The carriage also comprises an elevating system for elevating the support member along a second path between a raised height and a lowered height.

The above solutions have in common that they require a large number of movable parts, thus making racks difficult to construct and unreliable in operation. Moreover, the solutions will, through their construction, also have a more restricted loading surface, so that only smaller loads may be transported with the vehicle. In addition, there will be a danger that the object or objects during lifting or lowering of the load could fall onto the vehicle, on the ground and/or the person(s) so to injury or damage the person, the object and/or the vehicle.

An object of the present invention will therefore be to seek to solve one or more of the above problems or disadvantages.

Still another object of the present invention will be to provide a raising and lowering device for supporting of load, where the raising and lowering device is easy to use, comprises a small number of parts and utilizes the entire loading surface.

These objects are achieved with a raising and lowering device for supporting of load according to the present invention through the features as stated in the following independent claim where further features of the invention appear from the dependent claims and the description below.

The present invention relates to a raising and lowering device for supporting of load, where the raising and lowering device is designed to be movable from a higher position to a lower position and vice versa, so that load can be raised from a lower position to a higher position or lowered from a higher position to a lower position. During the raising or lowering of load, the load is kept all the time in a horizontal position, i.e. a position that is parallel with an initial position for the raising and lowering device.

A raising and lowering adjustable device for supporting of load comprises a first beam and a second beam, wherein at least a first profile element in a slideable manner is connected to the first beam and at least a second profile element in a slideable manner is connected to the second beam. At least one strut is arranged between the first profile element and the second beam, so as to connect these, while at least one other strut is arranged between the second profile element and the first beam, so as to connect these. The above configuration will cause that the first and second beam are movable relative one another between a collapsed position and an expanded position of the raising and lowering device.

The strut or struts connecting the first respectively the second profile element and the second respectively the first beam will then through one of its end in appropriate ways be connected with the first respectively the second profile element, and through its opposite or second end in an appropriate way be connected with the first respectively the second beam.

In one embodiment of the present invention it may be provided at least one additional strut or "tilting strut" between each strut connecting the first profile element and the second beam. The additional strut or "tilting strut" will through one of its end be connected to one end of the rod, where this end of the strut is opposite the end that is connected to the second beam, and through an area near a second end of the additional strut or "tilting strut" be connected with the first profile element.

The connection between the additional strut or "tilting strut" and the strut, and between the additional strut or "tilting strut" and the first profile element is preferably a pivot connection, such as a bolt and nut connection or the like, so as to permit a pivoting or rotation of the different elements relative each other when the raising and lowering device is brought from a stowed position to an extended position and vice versa.

The first beam may be formed for connection to, for instance, a vehicle, a cabinet or the like, while the second beam can form a support for a load.

The first and the second profile element is arranged to be movable relative each other, where the first and the second profile element can be arranged adjacent each other and in contact with each other, or the first and the second profile element can be interconnected in a slidable manner. The first and second profile element can further be arranged to be parallel to one another when the raising and lowering device for supporting the load is brought from a collapsed position to an expanded position and vice versa.

To permit rotation of each of the first and the second beam relative each of the first and the second profile element, the at least one strut which is arranged between the second beam and the first profile element, and the at least one strut which is arranged between the first beam and the second profile element, be pivotally connected to the respective beams and profile elements, where this can be done through a pivot connection.

Further, each of the first and the second beam being may be formed with at least one guide means for at least one control device that is connected to or integrated in each of the first and the second profile element. In one embodiment of the present invention, the guide means may comprise one or more slots formed in each of the first and second beam, wherein the slit or slits may extend at least over a part of a length of the first and second beam. In one embodiment of the present invention, the slot or slots may be formed to extend substantially over the whole length of the first and second beam.

The control device may be a bolt, pin, carriage or the like which is designed to be able to be pushed in the slot or slots formed in the first and second beam. The control device may further be configured to allow a rotation of the first and the second profile element when the control device is in a given position in the guide means.

It is also conceivable that the guiding device may comprise one or more grooves arranged in a surface of each of the first and second beam, where the control device formed in each of the first and the second profile element can be a protruding element provided with a complementary shape of the groove.

The groove or grooves can be envisaged having any structure that involves the first and the second profile element to be guided, such as a T-shape, an inverted T shape, an I-shape or the like.

It is also to be understood that the first and the second beam may be provided with a control device, such as a bolt, pin, carriage or the like, while the first and second profile element may be provided with guide means, for example in the form of slot (s), groove(s) or the like.

In one embodiment of the present invention, the first profile element may be arranged for reception of the second profile element, as the first profile element then, on an inside, may be formed with one or more slots or equivalent for reception of complementary protruding elements formed on an outside of the second profile element. Alternatively, the second profile element may be formed with a groove on its outside, while the first profile element will then be formed with complementary projecting elements on its inside.

The first and the second profile element will, in such an embodiment, first undergo a sliding, linear motion and then a rotational movement by use of the raising and lowering device according to the present invention, when the raising and lowering device is brought from a retracted position to one extended position and vice versa, as each of said first and second profile element can then be connected to a sliding element.

In one embodiment, the sliding element may be designed to allow a rotation of the first and the second profile element, with respect to the first and second beam, near one end of the guide means arranged in the first and second beam. The sliding element may then comprise a first part and a second part which are rotatably connected to each other, where the first part of the sliding element then forms a control device in a guiding means arranged in, for instance, the first or second beam, while the second part of the sliding element will be rigidly connected to, for instance, the first or the second profile element.

To prevent the first and second profile member to move too far in relation to each other when using the raising and lowering device, each of the first and second beam may, alternatively the first and the second profile element, be designed with a stop device that prevents said control device to be moved further beyond this point. Such a stop device may be in the form of a bolt, pin, an end termination of the guide means or equivalent.

It can also be used a further resistance device which can prevent the control means to slide back in the guide means, when the first and the second profile member has moved the maximum distance in relation to each other, where said resistance device will allow a rotation of the first and the second profile element without the control means and guide means moving relative each other.

To ensure that the raising and lowering device for supporting a load according to the present invention is not lowered/raised unintentionally, for example during transport with vehicles, the raising and lowering device can be locked in a certain position, such as a collapsed or retracted position, where this, as an example, can be achieved by using at least one locking pin, safety bolt or similar, which prevents movement between the different elements of the raising and lowering device.

To facilitate handling of the raising and lowering device when it is brought from a retracted position to an extended position, or from an extended position to a retracted position, the raising and lowering device for supporting load according to the present invention may comprise an auxiliary device in the form of one or more pneumatic or hydraulic cylinders, one or more mechanical springs or one or more motors with or without winch(es), where this or these, for instance, may be arranged between the first beam and the first profile element, and/or between the second beam and the second profile element. A person skilled in the art will understand that the auxiliary device can also be arranged between other components of the raising and lowering device, whereby this is not further described herein.

The raising and lowering device for supporting load according to the present invention can conceivably be formed symmetrically about, for instance, a common center of gravity of the first and the second profile element, but it is understood that the raising and lowering device for supporting load can be formed asymmetrically.

The present invention also relates to a system where two or more raising and lowering devices for supporting load can be put together to form the system, so that the system can support a heavier load, form larger surface for supporting load etc. A plurality of coupling devices may then be used to connect and stiffen the two raising and lowering devices, where, for instance, a coupling device may be arranged at a front end and a coupling device can be arranged in a rear end of the raising and lowering devices. Such a coupling device may further be adjustable, for instance, telescopic rods, two rods connected through an adjustment sleeve, or it may be of a fixed length, such as a solid rod. A person skilled in the art will know that several coupling devices can be used, where these can be arranged between the front and rear coupling device. The coupling devices may further be provided with means for connection with the raising and lowering device for supporting load, where such means may be threads, bolt and nut or the like.

The raising and lowering device may in one embodiment comprise an angle adjustment device to adjust the raising and lowering device for supporting load at an angle relative, for instance, a roof of a vehicle, where the angle adjustment device may comprise a bracket connected to the first beam and a back stop connected to, for instance, a load base holder, where the bracket and back stop may be formed with teeth, screws or the like, so as to be adjusted and locked relative each other.

In one embodiment the raising and lowering device may comprise a release system for a number of locks in a locking device in the raising and lowering device, where the release system and the locks through connections are interconnected. The release system may comprise a number of buttons, actuators or electronic units. The connections may include wires, wires for signal transmission or a wireless system. A person skilled in the art would know that several release system and several locking devices can be used according to the present invention.

The first and second profile element are preferably made of extruded aluminum, but can also conceivably be made from other metals.

In an embodiment of the raising and locking device for supporting load, the first and the second profile element are rigidly connected with each other so that they act as a unit.

The raising and lowering device according to the present invention may, in an embodiment, be used as a roof rack for vehicles. In another embodiment, the raising and lowering device according to the present invention may, for instance, be used for lowering and raising of top cupboard in kitchen, for lowering and raising of shelves and/or drawers in (clothes) cabinets etc.

Further objects, structural embodiments and advantages of the present invention will become apparent from the following detailed description, the accompanying drawings and appended claims.

The invention will now be explained through several not limiting embodiments with reference to the accompanying figures wherein;
Figure 1 shows a principled view of a raising and lowering device for supporting load according to the present invention, where the raising and lowering device is shown moved from a fully assembled position at the top, to a completely extended position at the bottom,
Figures 2A-2B show details of a first embodiment of the raising and lowering device according to figure 1, where figure 2A shows the raising and lowering device in a fully collapsed position, while figure 2B shows the raising and lowering device in a completely extended position,
Figures 3A-3C show details of a second embodiment of the raising and lowering device for supporting load according to figure 1, where figure 3A shows the raising and lowering device in a completely extended position, figure 3B shows the assembled elements in a perspective view, while figure 3C shows a cross section of the assembled elements according to figure 3B,
Figures 4A-4B show an alternative embodiment of the raising and lowering device for supporting load according to one or more of figures 1-4, where figure 4A shows the raising and lowering device for supporting load in a partially extended position, while figure 4B shows a segment of and details of the raising and lowering device for supporting load,
Figure 5 shows a cross section of the assembled elements of the alternative embodiment of the raising and lowering device for supporting load according to figure 4,
Figures 6A-6C shows a sliding element with rotation possibility used for connecting two or more elements of the raising and lowering device according to the embodiment shown in figures 3A-3C, where the sliding member will allow the elements to slide and rotate relative each other,
Figures 7A-7B show an alternative embodiment of the sliding element illustrated in figures 6A-6C,
Figures 8A-8E show details of a third embodiment of the raising and lowering device according to figure 1, where figure 8A shows the raising and lowering device in a completely extended position, while figure 8B shows a cross section of the raising and lowering device according to figure 8A, and figures 8C-8E show an alternative embodiment of a sliding element according to figures 6A-6C and 7A-7B,
Figures 9A-9G illustrate different area of utilization of the raising and lowering device for supporting load according to the present invention;
Figure 10 shows an attachment of the raising and lowering device to a roof of a vehicle,
Figures 11A-11C show details of a second beam in the raising and lowering device for supporting load according to the present invention;
Figure 12A-12C show different auxiliary devices to to aid the handling of the raising and lowering device for supporting load when the device is brought from an extended position to assembled position,
Figure 13 shows a locking device to ensure that the raising and lowering device for supporting load according to the present invention is not lowered/raised unintentionally, for example during transport with vehicles,
Figure 14 shows a raising and lowering device for supporting load according to embodiments above, which in an alternative embodiment are interconnected by means of a coupling device in each end, seen from above and in a collapsed position,
Figure 15A-15E shows details of the connection means of the raising and lowering device for supporting load according to figure 14,
Figures 16A-16D show an adjusting device and details of this for the raising and lowering device for supporting load according to the present invention;
Figures 17A-17C show alternative embodiments of a release mechanism and a blocking mechanism for locks for the raising and lowering device for supporting load according to the present invention;
Figure 18 shows alternative embodiments of the release mechanisms of the raising and lowering device according to figures 17A-17C,
Figure 19 shows connections between release mechanisms and locks of the raising and lowering device,
Figures 20A-20C show in greater detail a locking device and a first lock of the locking device of the raising and lowering device for supporting load,
Figure 21A-21C show an alternative embodiment of a rotary element between the first beam and the first profile element according to figure 4A,
Figure 22 shows alternative embodiments of the first lock in the raising and lowering device for supporting load according to figures 20A-20C,
Figures 23A-23E show in greater detail the interaction between the first lock and a third lock of the locking device of the raising and lowering device for supporting load,
Figures 24A-24C show in greater detail the locking device and a second lock of the locking device to prevent sliding between a first profile element and second profile element of the raising and lowering device for supporting load,
Figures 25A-25B show in greater detail the locking device and the third lock of the locking means to prevent sliding between the first profile element and second profile element of the raising and lowering device for supporting load, and
Figure 26 shows in greater detail the interaction between the first lock, the second lock and a third lock of the locking device of the raising and lowering device for supporting load according to figures 23A-23E, seen in a perspective view.

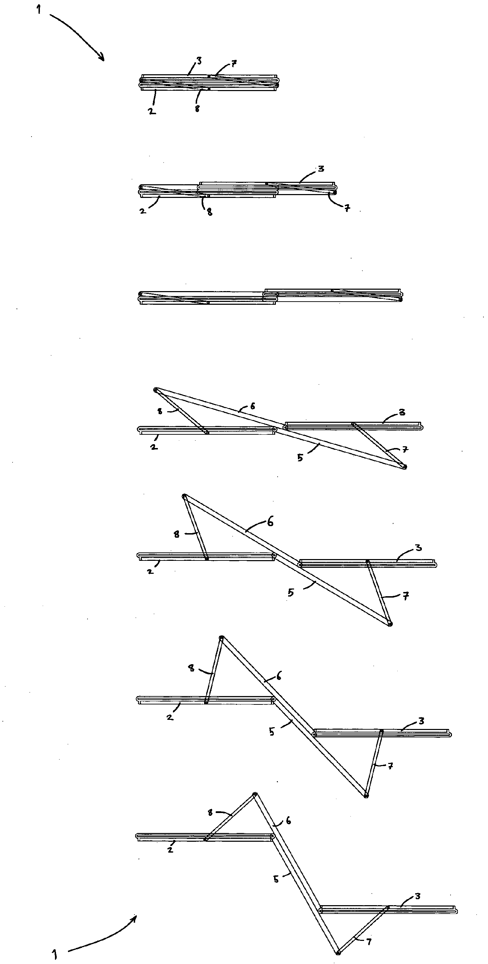

Figure 1 shows a raising and lowering device for supporting load 1 according to the present invention, where the raising and lowering device 1 is shown in a retracted position at the top of figure 1 and in an extended position at the bottom of figure 1. "The still pictures" which are arranged between the top and bottom figure show how the raising and lowering device 1 is brought from the retracted to the extended position.

The raising and lowering device for supporting load 1 according to the present invention comprises a first and a second beam 2, 3, first and second profile element 5, 6 and rod 7, 8. When the raising and lowering device 1 according to the present invention is in its retracted position as shown at the top of figure 1, the above mentioned elements will be located adjacent each other, so that the raising and lowering device 1 has a relatively small extension in height and width.

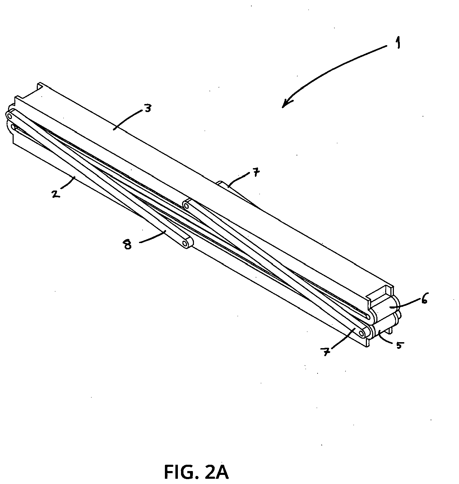

When the raising and lowering device 1 is to be used, i.e. brought from its retracted to its extended position (as shown at the bottom of figure 1), a user will grab the second beam 3 and pull the second beam 3 out horizontally from the raising and lowering device 1. The structural design of the raising and lowering device 1 will be further explained below and described in relation to figures 2A-3C.

When the second beam 3 has been pulled out horizontally a certain distance, to the other end of the beam 3, the first and second profile element 5, 6 will start to rotate and to be moved away from the first beam 2 and the second beam 3, such forming an angle with said first and second beam 2, 3. The first and second profile element 5, 6 will thereafter be moved parallel to each other in this inclined position, this resulting in that the second beam 3 starts to be lowered relative the first beam 2. Finally, the second beam 3 has been brought to a position as shown at the bottom of figure 1, where the raising and lowering device 1 will then be in its extended position. In this position, a load can be placed on the second beam 3 and then the process is repeated in reverse order to bring the load to the raising and lowering device's 1 retracted position.

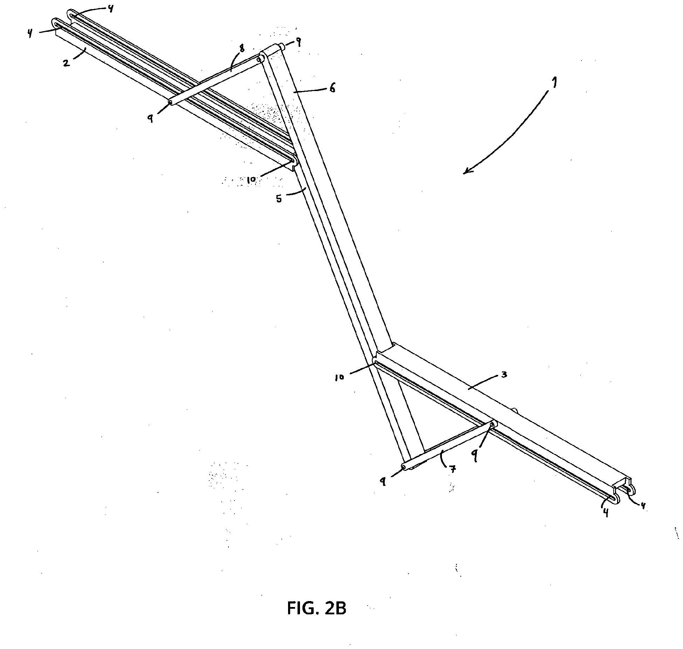

Figures 2A and 2B show details of a first embodiment of the raising and lowering device 1 according to the present invention, where figure 2A shows the raising and lowering device 1 in a stowed position and figure 2B shows the raising and lowering device 1 in an extended position.

The first beam 2 is in appropriate ways designed to be attached to a desired surface, such as a vehicle roof, a cupboard or similar.

The first beam 2 is further formed with two slots 4, in which two slots 4 there is provided a bolt, pin 10 or the like which is connected to a first profile element 5, in one end thereof. The slots 4 will form a guide means for the bolt or pin 10, where the bolt or pin 10 will be a control device for the first profile element 5.

A second profile element 6 is through two rods 8 also connected to the first beam 2, where the attachment between the rods 8, the first beam 2 and the second profile member 6 comprises a pivoting connection 9 in the form of a bolt or similar.

A second beam 3 is in a similar manner as the first beam 2 formed with two slots 4, so as to form a guide means for control device for the second profile element 6. The control device of the second profile element 6 is a bolt, pin 10 or the like.

The first profile element 5 is in a corresponding manner as the second profile element 6 connected to the second beam 3, where this connection is provided through two struts 7.

The first profile element 5 will then, in its one end, through the bolt or pin 10 (where the bolt or the pin forms a control device for the first profile element) be connected to the first beam 2 and at an opposite end, via struts 7, be connected to the second beam 3.

The second profile element 6 will then, in its one end, through the bolt or pin 10 (where the bolt or the pin forms a control device of the second profile element) be connected to the second beam 3 and at an opposite end, via struts 8, be connected to the first beam 2.

The pivot joints 9, slits 4 (guide means) and the bolt or pin 10 (control device) will result in that the different elements 2, 3, 5, 6 can be moved and rotated relative each other.

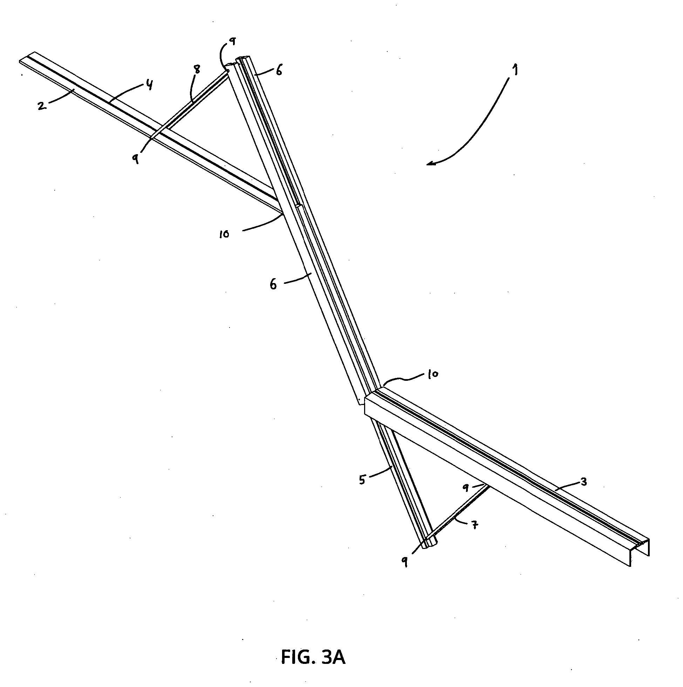

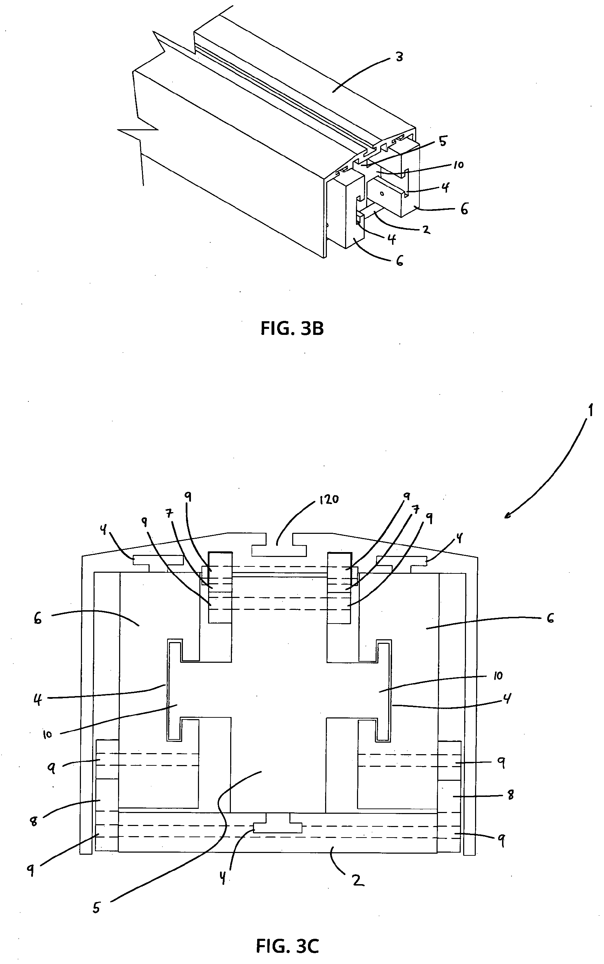

Figures 3A-3C show another embodiment of the raising and lowering device 1 according to the present invention, where figure 3A shows the raising and lowering device 1 in an extended position, figure 3B shows in a perspective view the second beam 3, the first profile element 5 and the second profile element 6 "assembled", while figure 3C shows a cross section through the elements shown in figures 3A and 3B.

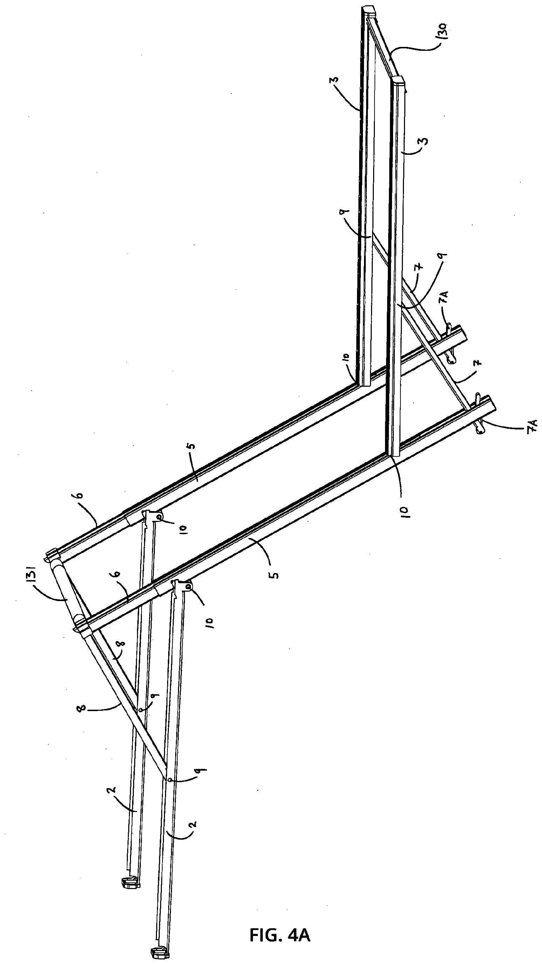

The first beam 2 is in appropriate ways designed to be connected to, for instance, a roof of a vehicle (not shown) and is on its outer surface formed with a slit 4 to form a guide means for a control device that is connected to the first profile element 5. Such a control device may in this embodiment be, for instance, a sliding element 11 which is allowed to rotate near one end of the slot 4 (guide means), so as to allow the first profile element 5 to be rotated relative the first beam 2. The sliding element's 11 design and operation will be explained in detail in relation to figures 4A-4C, 5A-5B and 6C-6E.

The second profile element 6 is on an inside also formed with slits 4, where the slits 4 are formed to receive a control device 10 which is arranged on the first profile element 5 and which forms an integral part of the first profile element 5.

The second profile element 6 is further, through two struts 8, connected to the first beam 2, where the connection between the struts 8, the first beam 2 and the second profile member 6 comprises a pivoting connection 9 in the form of a bolt or similar.

The first profile element 5 is in a corresponding manner as the second profile element 6 connected to the second beam 3, where this connection is provided through two struts 7. The attachment between the struts 7, the second beam 3 and the first profile element comprises a pivot joint 9 in the form of a bolt or the like.

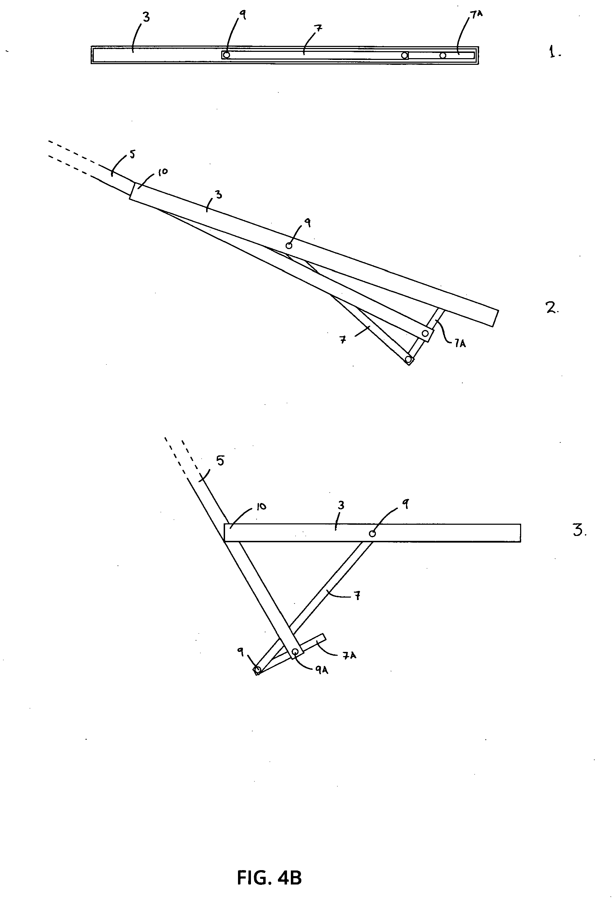

Figures 4A-4B show an alternative embodiment of the raising and lowering device 1 for supporting load according to one or more of figures 1-4, where figure 4A shows the raising and lowering device 1 for supporting load in a partially extended position, while figure 4B shows a section and details of the raising and lowering device 1 for supporting load according to figure 4A.

A first beam 2 is in appropriate ways designed to be attached to a desired surface, such as a vehicle roofs, a cupboard or similar.

The first beam 2 is connected to a first and second profile element 5, 6, where the first beam 2 through a pivot connection 10 is pivotally connected to the first profile element 5, and through strut 8 is connected to the second profile element 6. The struts 8, the first beam 2 and the second profile element 6 are connected by a pivot connection 9. The pivotal connections 9, 10 can for instance comprise a bolt and nut or the like.

A second beam 3 is further, at one end and through a pivot connection 10, pivotally connected to the second profile element 6. The second beam 3 is also connected to the first profile element 5 through the strut 7, each of the strut 7 further being connected to a " tilting strut »7A.

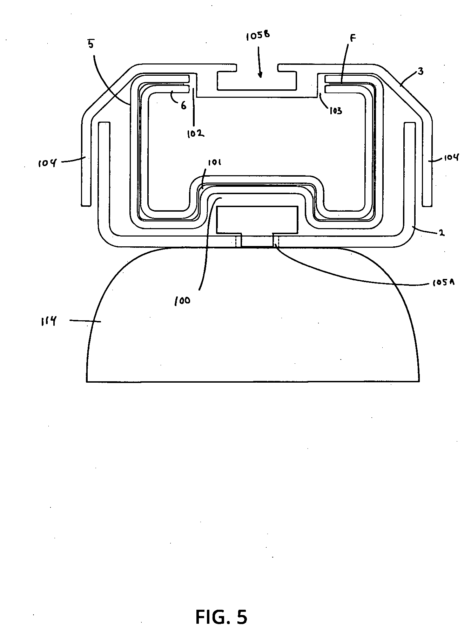

The second profile element 6 is further arranged inside the first profile element 5, see also figure 5, so that the first and second profile element 5, 6 can be moved relative each other.

Figure 4B shows a section of the raising and lowering device 1 for supporting load according to figure 4A, in which only a half, i.e. the right side of the raising and lowering device 1 for supporting load is shown. The upper figure shows the raising and lowering device 1 for supporting load in a collapsed position (position 1), the central figure shows the raising and lowering device 1 for supporting load in the process of being led to an expanded or collapsed position (position 2), while the lower figure shows the raising and lowering device 1 for supporting load in a fully expanded position.

In its collapsed position the strut 7 and "tilting strut" 7A will be arranged in a substantially horizontal plane, where "tilting strut" 7A will be an extension of the strut 7. When the raising and lowering device 1 for supporting load is to be brought to an extended position, a user will begin to pull the second beam 3 horizontally outwards, until the second beam 3 is brought beyond a termination of, for example, a roof of a vehicle. The second beam 3 will then start to be lowered, whereby this will result in that the second beam 3, through the pivot joint 10, first starts to rotate relative the first beam 2 and then relative the first profile element 5. This rotation will also cause said strut 7 and "tilting strut" 7A to move relative the second beam 3. The "tilting strut" 7A, which is rotatably connected to the first profile element 5 through a pivot joint 9A, will then be rotated about this pivot joint 9A, whereby this rotation will result in that "tilting strut" 7A will push or thrust up the second beam 3 (see figure in the middle).

Each rod 7 and each "tilting strut" 7A are, through one of its end, connected to each other through a pivot joint 9, while "tilting struts» 7A are further pivotally connected to the first profile element 5 through a pivot connection 9A.

The pivot connection 9A is arranged at one end of the first profile element 5 and in an area around half the length of the "tilting strut» 7A.

Through the above-described arrangement of the second beam 3, the first profile member 5, strut 7 and "tilting strut" 7A it will be obtained that the second beam 3 is lifted somewhat up from the second profile element 5 when the raising and lowering device 1 for supporting load is to be brought to an extended position, so as to facilitate extraction of this. Similarly, the above-described arrangement causes that the second beam 3 is lowered toward the second profile element 5 when the raising and lowering device 1 for supporting load is to be brought to a collapsed position.

Figure 5 shows a cross section of the assembled elements of the alternative embodiment of the raising and lowering device 1 for supporting load according to figure 4.

The first beam 2 is on a side facing towards a roof 112 of a vehicle in appropriate ways designed to be connected thereto through a load base holder 114. The first beam 2 will be designed with one or more slots or grooves 105A for receiving one or more load base holders 114. The first beam 2 is also U-shaped, so as to house or accommodate the first and second profile element 5, 6 when the raising and lowering device 1 for supporting load 1 is arranged in its collapsed position.

The first profile element 5 is on a surface facing down towards the first beam 2 provided with a groove or ridge 100 extending across the length of the first profile section 5. Similarly, the second profile element 6 will also, on a surface facing down towards the first beam 2, be provided with a groove or ridge 101 extending across the length of the second profile element 6. The grooves or ridges 100, 101 enable the connection between the first beam 2 and the load base holder 114 without the load base holder 114 and its fastening means comes in contact with the first and the second profile element 5, 6.

When the second profile element 6 is arranged in the first profile element 5, the groove or ridge 101 of the second profile section 6 will have a width and height slightly greater than a width and height of the groove or ridge 100 of the first profile section 5. However, it should be understood that said first profile element 5 may be arranged in the second profile element 6.

Furthermore, the first and the second profile element 5, 6 is on an opposite side of the groove or ridge 100, 101 formed with an open, longitudinal slot 102 which extends throughout the length of the first and the second profile element 5, 6, so that inner side walls 103 formed in the second beam 3 may extend through the open slit 102 and into a cavity provided in the first and the second profile element 5, 6. The open and longitudinal slot 102 will further cause that the second beam 3 formed with the inner sidewalls 103 can be moved in a longitudinal direction of the first and the second profile element 5, 6, so as to bring the raising and lowering device for supporting load 1 between a retracted position and an extended position.

A person with skill in the art will understand that the first and the second profile element 5, 6 also can be arranged turned "upside down", so that the open slot 102 in the first and the second profile element 5, 6 will be facing down towards the first beam 2, while the groove or ridge 100, 101 will then be arranged facing away from the first beam 2.

The second beam 3 will further be configured with side walls 104 to overlap at least a part of the side walls of the U-shaped first beam 2 and is on an outer surface formed with a T-shaped groove 105B extending which extends over the entire length of the second beam 2.

Between the first and the second profile element 5, 6 is arranged at least one slide bearing F, so as to prevent "wear" between the first and the second profile element 5, 6 when the raising and lowering device 1 for supporting load is brought between the collapsed and extended position.

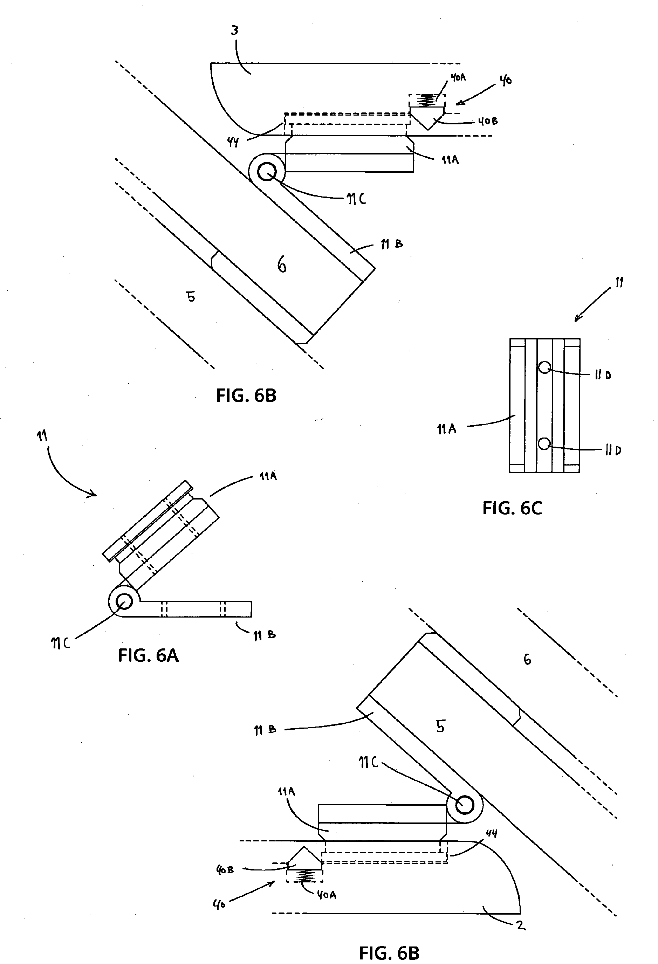

In figure 6A is shows a sliding element 11 which is used to connect two or more elements of the raising and lowering device 1 according to the present invention, where the sliding member 11 will allow the connected elements both to slide and rotate relative each other. The sliding element 11 has a first portion 11B that, through suitable connection means such as a bolt or similar, is rigidly connected to one element, such as the first or second profile element 5, 6. A second portion 11A of the sliding member 11 will then be connected to a guide means arranged in another element, such as the first or second beam 2, 3, so forming a control device for the second part 11A of the sliding member 11.

The sliding element's 11 first and second portions 11A, 11B are connected to each other through a pivot connection 11C in the form of a bolt or similar.

In figure 6b is shown that a sliding element 11 is used to connect the first beam 2 with the first profile element 5, and further that a second sliding element 11 is used to connect the second beam 3 with the second profile element 6, where the sliding element 11 will allow the first beam 2, respectively the second beam 3 and the first profile element 5, respectively the second profile element 6, first to slide and then to be rotated relative one another when the raising and lowering device 1 is brought from a fully retracted to a fully extended position. The sliding element 11 which connects the first beam 2 with the first profile element 5 will, through the first part 11B be rigidly connected to the first profile element 5 so that the sliding element 11 is not allowed to move relative to the first profile element 5, while the second part 11A of the sliding member 11 will be arranged in slot 4 formed in the first beam 2 (see also figure 3A).

The sliding element 11 which connects the second member 3 with the second profile element 6 will through the first part 11B be rigidly connected to the second profile element 6 so that the slide element 11 is not allowed to move relative the second profile element 6, while the second part 11A will be arranged in a slot 4 formed in the second beam 3.

Close to one end of the slots 4 formed in the first and second beam 2, 3 there is arranged a resistance device 40, which resistance device 40 comprises a spring 40A and a blocking pin 40B. The resistance device 40 will allow the sliding element 11 to be guided beyond the resistance device 40 when the force used to push or pull the element to which the sliding element 11 is fixedly connected to is greater than the resistance the spring 40A exerts on the sliding element 11 via the blocking pin 40B. The blocking pin 40B will then be pushed inwards into the first, respectively the second beam 2, 3, and the sliding element 11 will be moved past the resistance device 40.

When the sliding element 11 has moved past said resistance device 40, the spring 40A will push the blocking pin 40B out, so that the blocking pin 40B prevents the sliding element 11 to slide back in again, without having applied a greater force.

When the raising and lowering device 1 of the present invention is to be brought from a fully retracted position to a fully extended position, a user will start pulling the second beam 3, see also figure 1, where this will result in that the first profile element 5 first will be moved linearly relative the first beam 2, until the sliding element 11 is moved past said resistance device 40 of the first beam 2, and has reached a stop device 44, for instance in the form of a pin, stud, an end termination of the slot 4 or the like, arranged near or at one end of the slot 4 of the first beam 2 (see figure 3A), after which the first profile element 5 is allowed to rotate relative the first beam 2 through the sliding element 11. The resistance device 40 will then prevent that the first profile element 5 is moved relative to the first beam 2. At the same time, and similarly, the second beam 3 is firstly moved linearly relative the second profile element 6 until the sliding element 11 is moved past said resistance device 40 of the second beam 3, and has reached a stop device 44, for instance in the form of a pin, stud, an end termination of the slot 4 or the like, arranged near or at an end of the slit 4 in the second member 3, whereafter the second beam 3 is allowed to rotate relative the second profile element 6 through the sliding element 11. The resistance device 40 will prevent the second beam 3 to move relative the second profile element 6.

The first and the second profile element 5, 6 will then be moved linearly relative each other, through the interaction of the slots 4 and the control device in the form of the second part 11A of the sliding element 11 as explained in relation to figures 3A-3C.

Figure 6C shows the sliding element 11 from above, where it can be seen that the sliding element 11 is formed with two holes 11D so as to be firmly connected with the first, respectively the second profile element 5, 6.

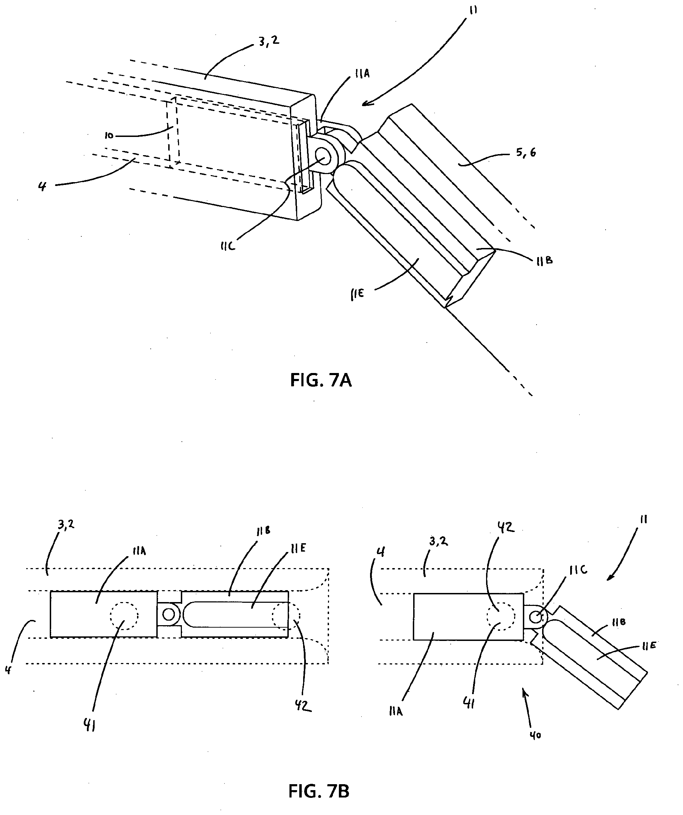

An alternative embodiment of a sliding element 11 is shown in figures 7A-7B, seen in a perspective view and side view, where it can be seen that the sliding element 11 is used to connect the first beam 2 with the first profile element 5, respectively the second beam 3 with the second profile element 6. The sliding element 11 will allow the first beam 2, respectively the second beam 3 and the first profile element 5, respectively the second profile element 6 first slides and thereafter are rotated relative one another when the raising and lowering device 1 is brought from a fully retracted to a complete extended position. The sliding element 11 which connects the first beam 2 with the first profile element 5 will, through the first part 11B be rigidly connected to the first profile element 5 so that the sliding element 11 is not allowed to move relative the first profile element 5, while the second part 11A of the sliding member 11 will be arranged in slot 4 formed in the first beam 2 (see also figure 3A).

The sliding element 11 which connects the second beam 3 with the second profile element 6 will through the first part 11B be rigidly connected to the second profile element 6 so that the sliding element 11 is not allowed to move relative the second profile element 6, while the second part 11A will be arranged in a slot 4 formed in the second beam 3.

In the second part 11A of the sliding element 11 there is provided a magnet 41, where this magnet 41 will interact with a magnet 42 arranged in a slot 4 formed in the first and second beam 2, 3, when the sliding member 11 has reached a stop device, for instance in the form of a pin, stud, an end termination of the slot 4 or the like, arranged near or at one end of the slot 4 of the first, respectively the second beam 2, 3. In this position the magnets 41, 42 may be arranged aligned with each other and attracting each other and so form a resistance device 40.

The other part 11B of the sliding element 11 is formed with a projecting portion 11E which is shaped complementarily with a slot 4 in the first, respectively the second beam 2, 3.

When the raising and lowering device 1 according to the present invention is to be brought from a fully retracted position to a fully extended position, a user will start pulling the second beam 3, see also figure 1, where this will result in that the first profile element 5 first will be moved linearly relative the first beam 2, until the sliding element 11 has reached a stop device such as a pin, stud, an end termination of the slot or the like, arranged near or at one end of the slot 4 of the first beam 2 and where the magnets 41, 42 in this position are arranged in line with each other. In this position, the second part 11B of the sliding element 11 will be completely pulled out of the slit 4, so that the first profile element 5 is allowed to rotate relative the first beam 2 through the sliding element 11. The resistance device 40 will prevent that the first profile element 5 is moved relative the first beam 2.

At the same time, and similarly, the second beam 3 is first moved linearly relative the second profile element 6 until the sliding element 11 has reached a stop device (not shown), for instance in the form of a pin, stud or the like, arranged near an end of the slot 4 in the second beam 3 and where the magnets 41, 42 in this position is arranged in line with each other. In this position, the second part 11B of the sliding element 11 will be completely drawn out of the slit 4, so that the second beam 3 is allowed to rotate relative the second profile element 6 through the sliding element 11. The resistance device 40 will prevent the second beam 3 to be moved relative the second profile element 6.

The first and the second profile element 5, 6 will then be moved linearly relative each other, through the interaction of the slots 4 and the control device 10 as explained in relation to figures 3A-3C.

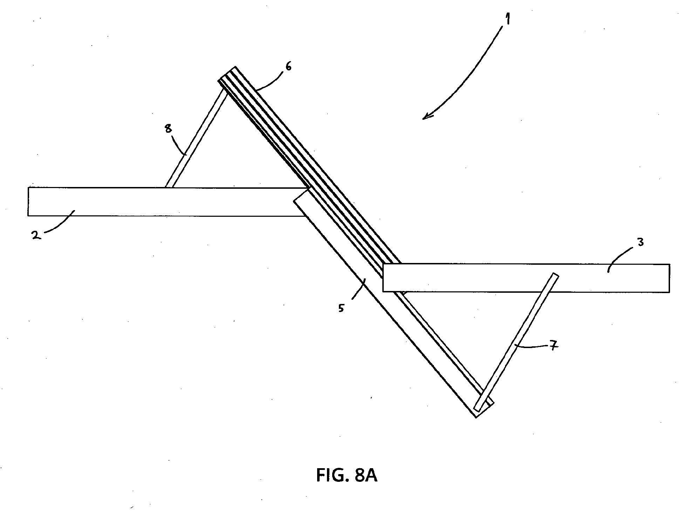

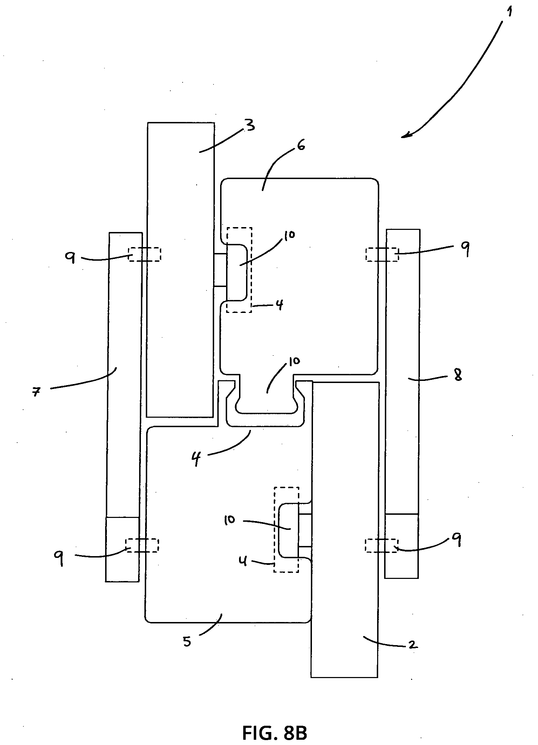

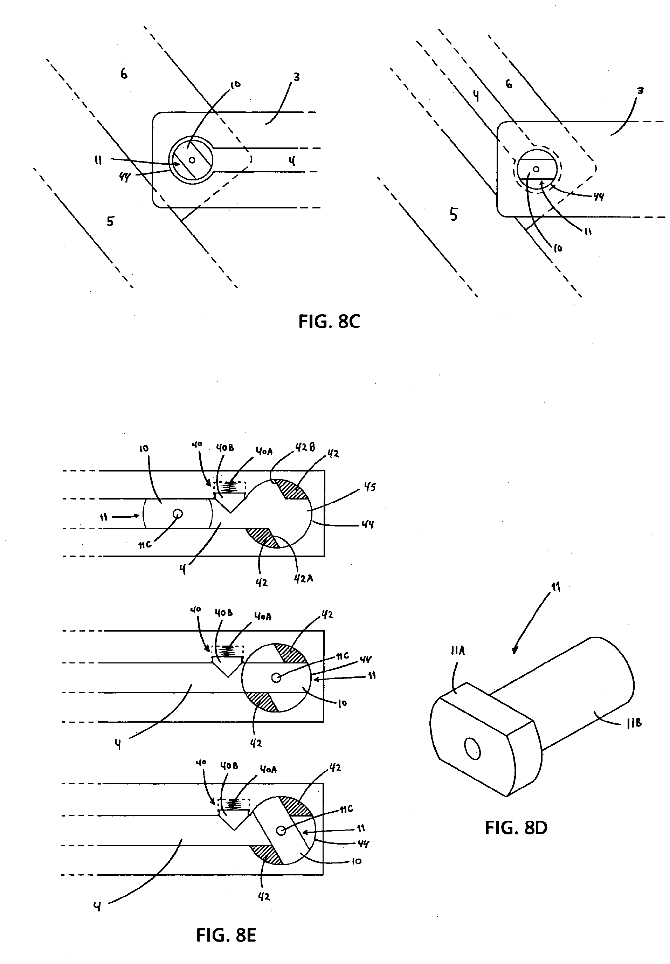

Figures 8A-8B show a further embodiment of the raising and lowering device 1 according to the present invention, where figure 8A shows the raising and lowering device 1 in an extended position, while figure 8B shows a cross section through the elements shown in figure 8A in a retracted position.

The first beam 2 is in appropriate ways designed to be connected to for instance a roof 112 of a vehicle and is on its outer surface formed with a control device in the form of a projecting part 10 which is to be received in a guide means in the form of a slot 4 formed in the first profile element 5. The first profile element 5 is also provided with an additional guide means 4 in the form of a slot for receipt of a control device in the form of a projecting part 10 formed on the second profile element 6.

The second profile element 6 is further formed with a guide means 4 in the form of a slot for receipt of a control device in the form of a projecting part 10 that is formed on the second beam 3.

The second beam 3 and the first profile element 5 is further, through the strut 7, connected to each other, while the strut 8 will connect the first beam 2 and the second profile element 6.

The attachment between the struts 8, the first beam 2 and the second profile member 6 comprises a pivoting connection 9 in the form of a bolt or similar.

The attachment between the struts 7, the second beam 3 and the first profile element 5 comprises a pivoting connection 9 in the form of a bolt or similar.

Figures 8C-8E shows a further alternative embodiment of a sliding element 11, where it is seen that the sliding element 11 is used to connect the first beam 2 with the first profile element 5, respectively the second beam 3 with the second profile element 6. The sliding element 11 will allow the first beam 2, respectively the second beam 3 and the first profile element 5, respectively the second profile element 6 first slides and thereafter are rotated relative one another when the raising and lowering device 1 is brought from a fully retracted to a fully extended position. The sliding element 11 which connects the first beam 2 with the first profile element 5 will, through the first part 11B, be rigidly connected to the first profile element 5 so that the sliding element 11 is not allowed to move relative the first profile element 5, while the second part 11A of the sliding member 11 will be arranged in slot 4 formed in the first beam 2.

The sliding element 11 which connects the second beam 3 with the second profile element 6 will, through the first part 11B, be rigidly connected to the second profile element 6 so that the sliding element 11 is not allowed to move relative the second profile element 6, while the second part 11A will be arranged in a slot 4 formed in the second beam 3.

An end termination of the slot 4 is formed with a recess 45 in the form of a circle, where the recess 45 has a shape adapted to the second part 11A of the sliding element 11. In the recess 45 there is arranged two elements 42 which allows the second portion 11A of the sliding member 11 only is rotated a certain angle.

A resistance device 40, which resistance device 40 comprises a spring 40A and a blocking pin 40B is further arranged before the recess 45, where the resistance device 40 will allow the sliding element 11 to be guided beyond the resistance device 40 when the force used to push or pull the element to which the sliding element 11 is fixedly connected is greater than the resistance the spring 40A exerts on blocking pin 40B. The blocking pin 40B will then be pushed inwards into the first, respectively the second beam 2, 3, and the sliding element 11 will be moved past the resistance device 40.

Figure 8E shows three positions of the sliding element 11, where the upper figure shows the sliding element 11 which is moved towards the resistance device 40 and the recess 45, the figure in the middle shows the sliding element 11 which is moved past said resistance device 40 and into the recess 45, where the second part 11A of the sliding element 11 is brought into contact with the elements 42. The elements 42, which fills part of the recess 45, will then have a surface 42A extending parallel to the slit 4 and a surface 42B that forms an angle relative to the slot 4. The surfaces 42A will prevent the sliding element 11 to rotate counterclockwise, while the surfaces 42B will allow the sliding element 11 a slight rotation clockwise, until the second part 11A of the sliding element 11 is rotated into engagement with the surfaces 42B.

In this case, the recess 41 is considered to be a stop device 44.

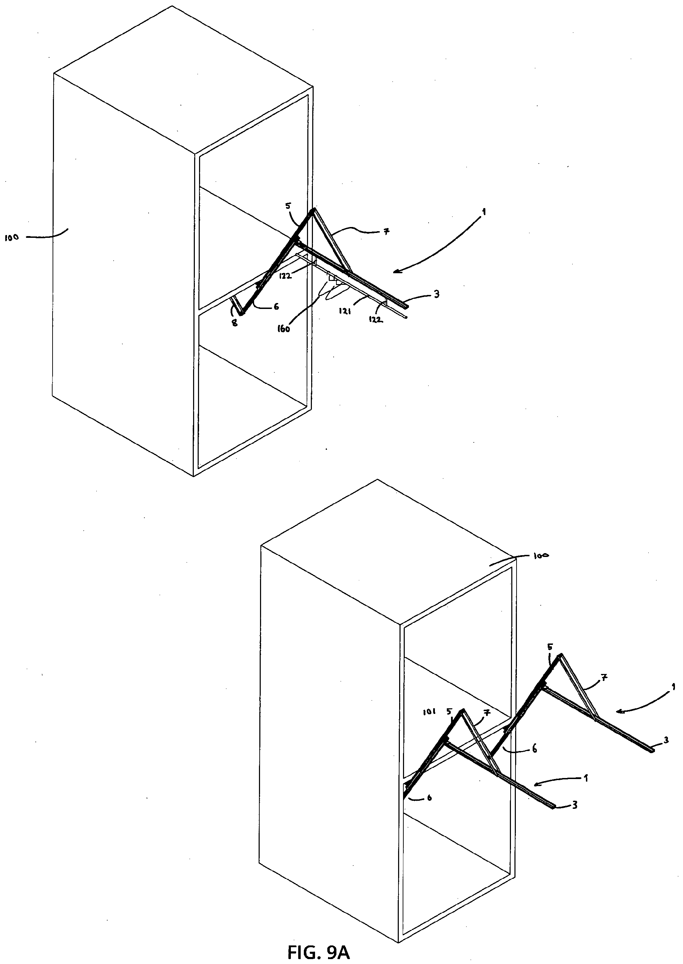

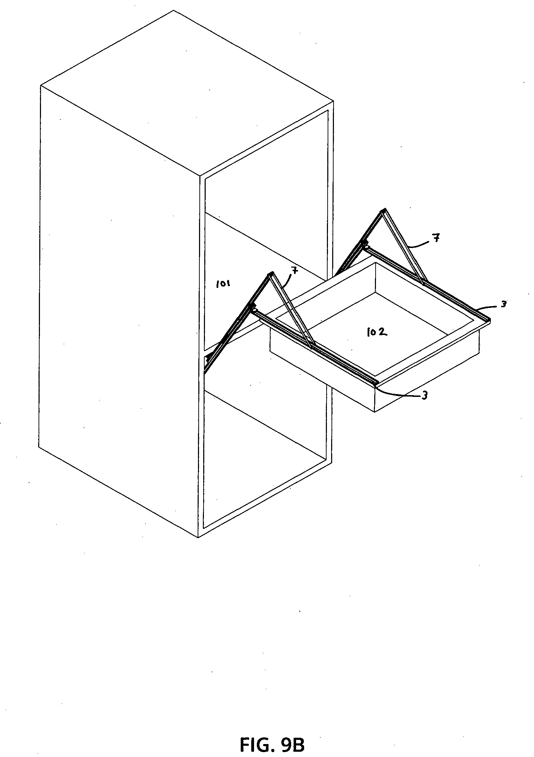

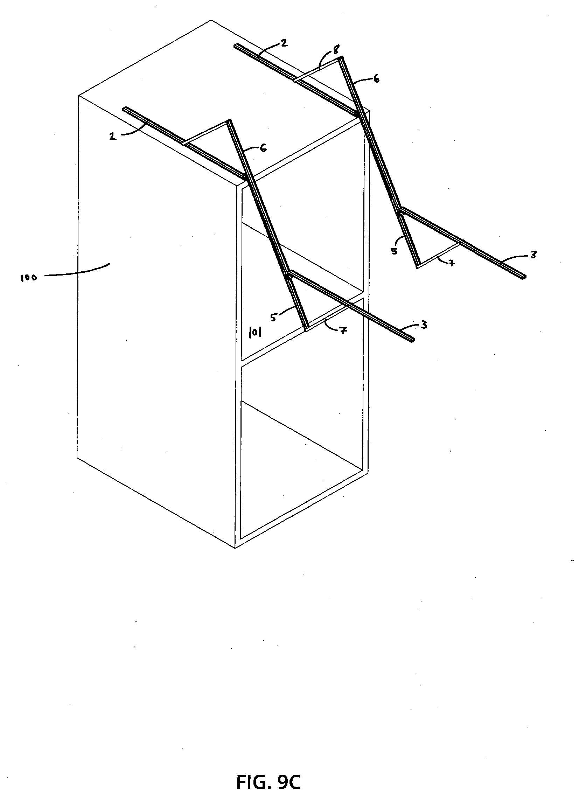

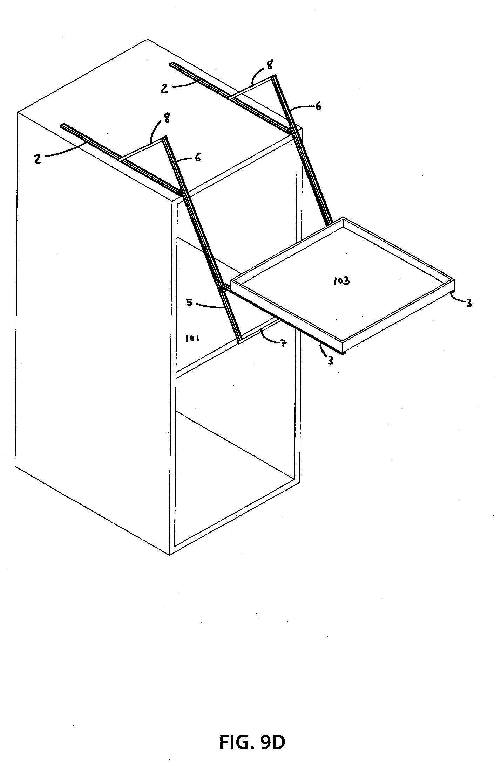

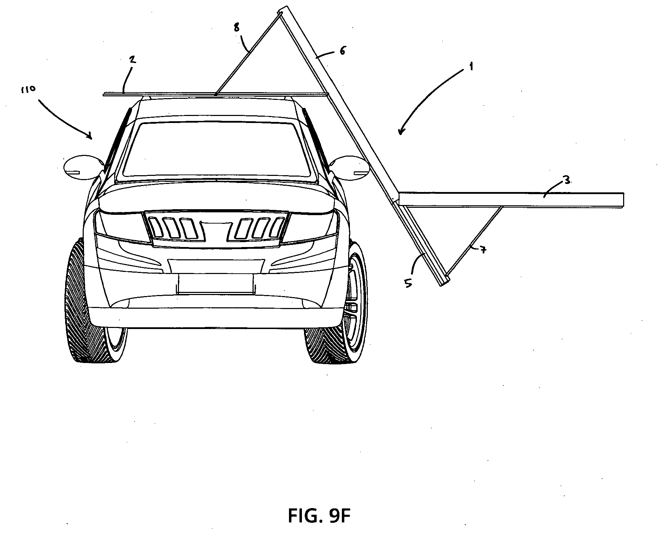

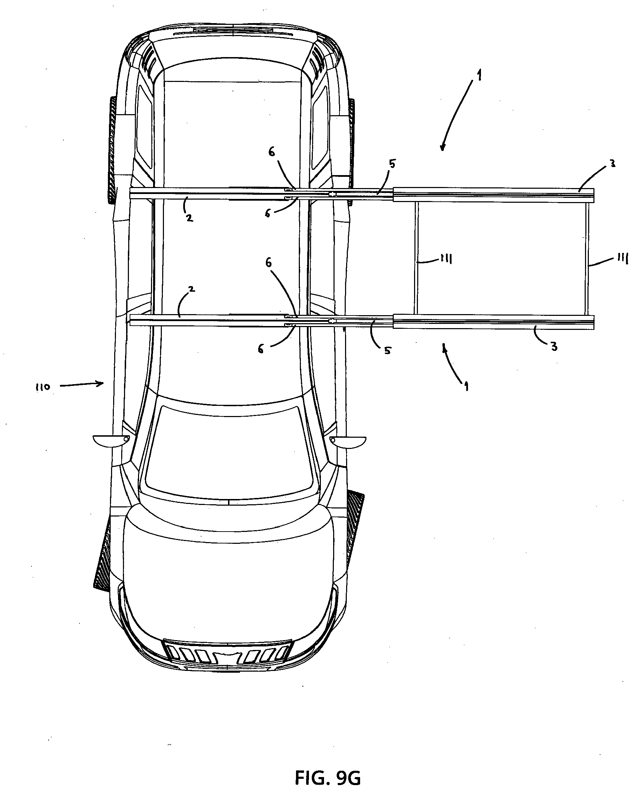

In figures 9A-9G is shown various "applications" for the raising and lowering device 1 according to the present invention, where figures 9A-9D show one or two raising and lowering devices 1 mounted in a cabinet 100, where the raising and lowering devices 1 can either be mounted in the cabinet 100, such as on an underside of a shelf 101, to the walls of the cabinet etc., for moving a drawer 102 from a position in the cabinet 100 to a position outside the cabinet 100, or vice versa. The raising and lowering devices 1 can also be mounted on the cabinet 100, as shown in figures 9C-9D, in order to move a tray or the like from an upper side of the cabinet 100 and to a lower position outside the cabinet 100.

At the top of figure 9A is shown a raising and lowering device 1 that can be used for supporting the clothes, where the second beam 3 then through two spacers 122 are connected to a rod 121, where it, for example, can be suspended hangers 160.

A person skilled in the art will know that the raising and lowering device 1 according to the present invention also may be connected in other ways to the cabinet, both inside and outside the cabinet 100.

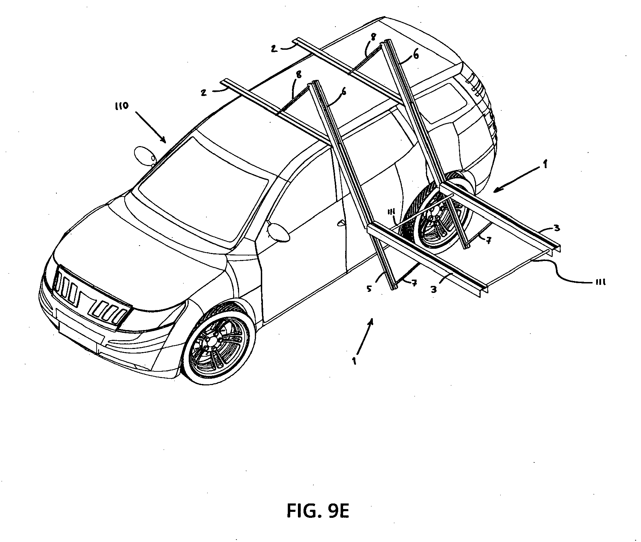

Figures 9E-9G show two raising and lowering devices 1 arranged on a vehicle 110, seen in a perspective view, from front and from above, where the two second beams 3 are connected by two transverse bars 111, so as to stabilize the raising and lowering devices 1.

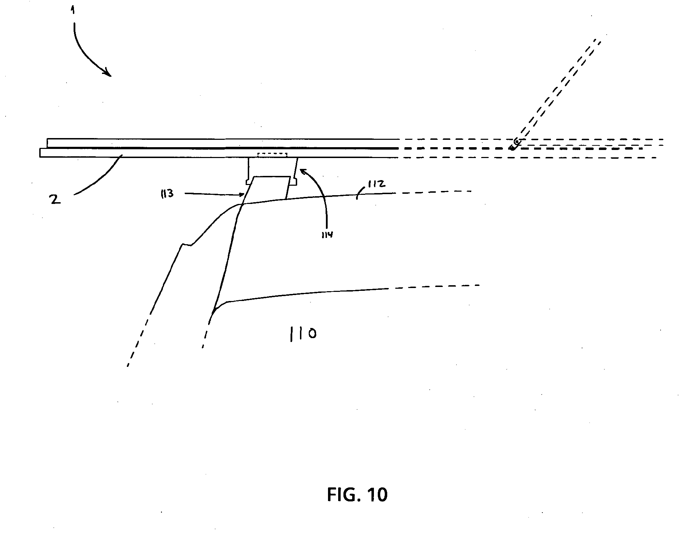

Figure 10 shows a fastening of the raising and lowering device 1 on a roof 112 of a vehicle, where the raising and lowering device 1 can be connected to the rails 113 arranged on the roof 112 of the vehicle through one or more attachment elements 114.

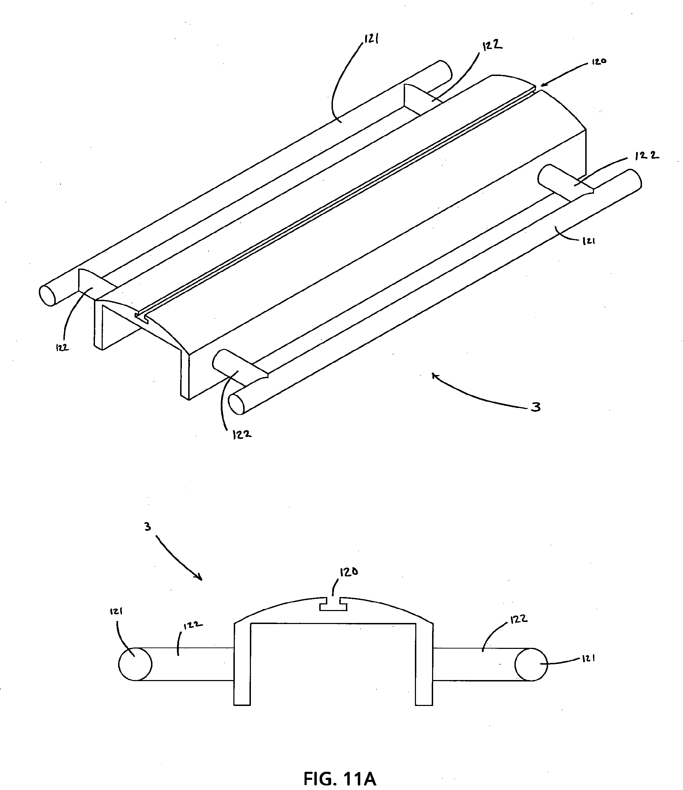

Figures 11A-11D show the design of the second beam 3 in connection with the mounting and securing of load (not shown), and associated fasteners.

Figure 11A shows a first embodiment of the second beam 3, where the second beam 3 at an upper side is formed with an inverted T-shaped groove 120 for the T-bolts 150 extending across the whole length of the second beam 3, where it further on each side of the second beam 3 is provided a fastening bar 121 for straps, bands etc., which are used to fasten and secure the load to the raising and lowering device 1 according to the present invention.

Fastening bars 121 are connected to the second beam 3 by means of a plurality of spacers 122. The fastening bars 121 in this embodiment extends across the whole length of the second beam 3.

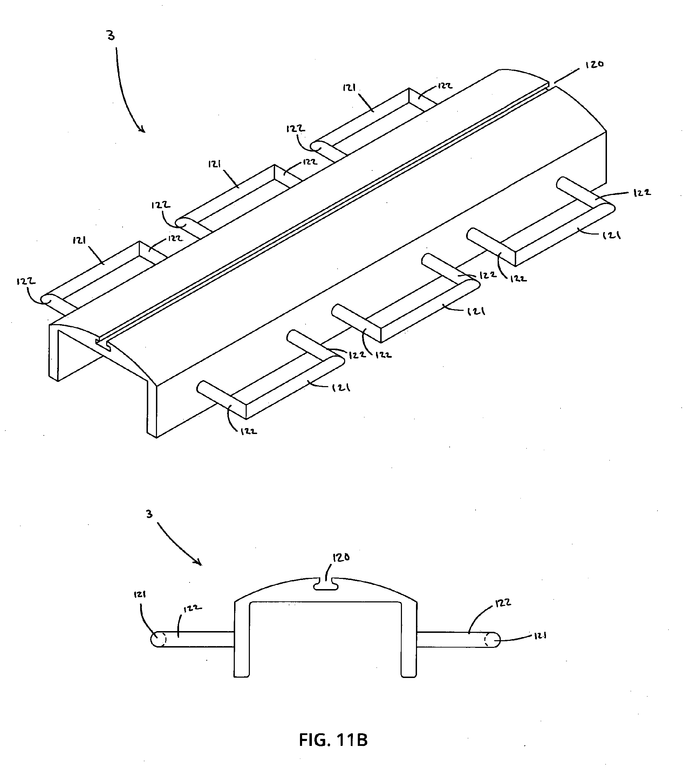

In figure 11B is shown an alternative embodiment of the fastening bars 121, as six individual and from each other independent fastening rods 121 are arranged on the second beam 3.

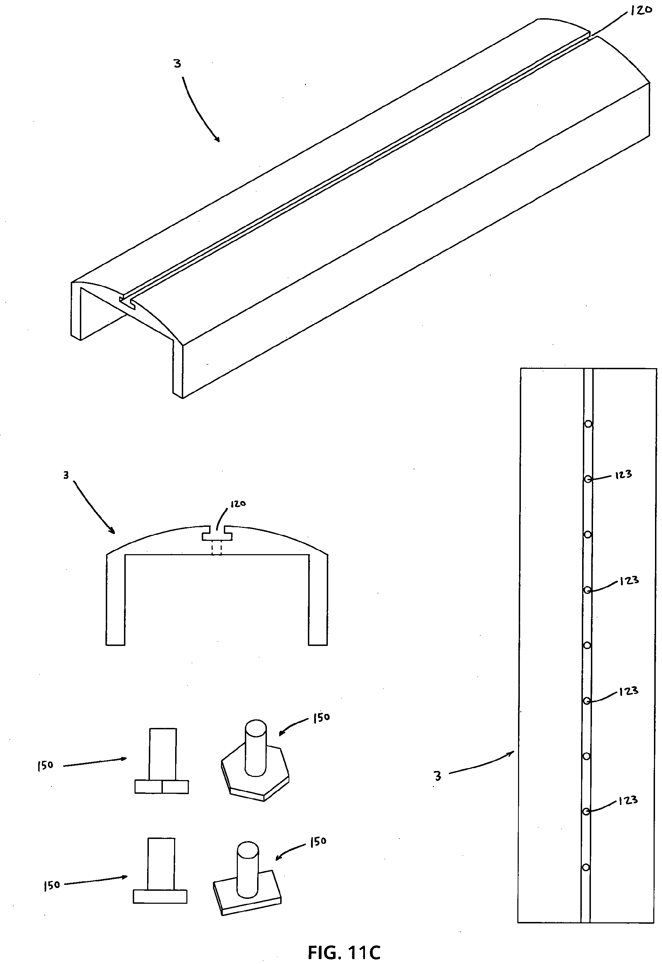

Figure 11C illustrates a further embodiment of the second beam 3 for mounting and securing of the load, where the second beam 3 at an upper side is formed with an inverted T-shaped groove 120 extending over the whole length of the second beam 3. In the T-shaped slot 120 is provided a number of holes 123 along the whole length of the second beam, where the holes 123 are arranged spaced apart from each other.

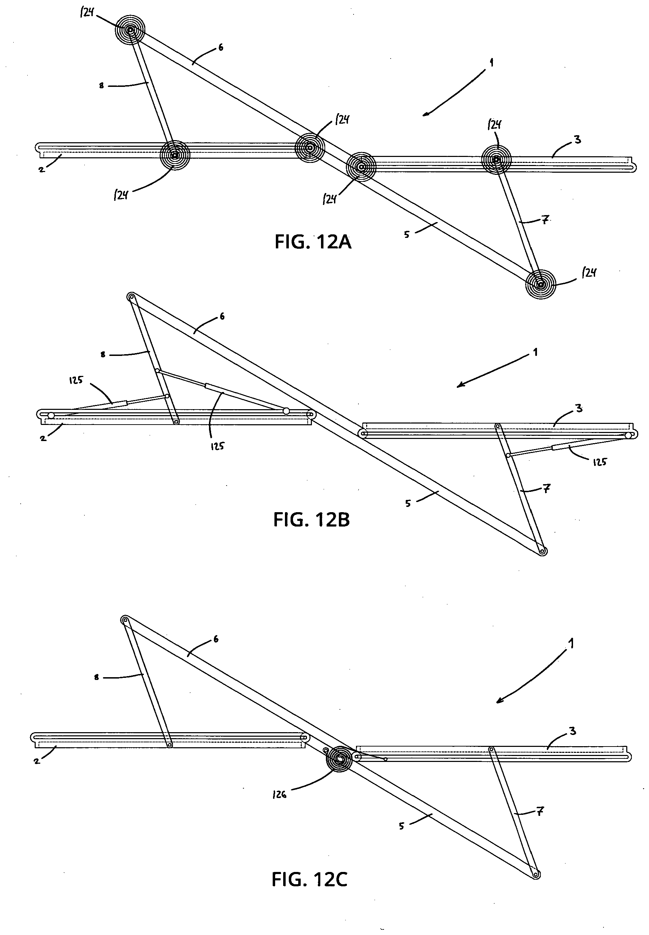

Figures 12A-12C shows various auxiliary means for facilitating the handling of the raising and lowering device 1 according to the present invention when it is brought from a retracted position to an extended position or from an extended position to a retracted position.

In figure 12A is shown a possible location of a number of torque springs 124 provided between the various elements, figure 10B shows the use of gas cylinders 125, while figure 10C shows the use of a clock spring 126.

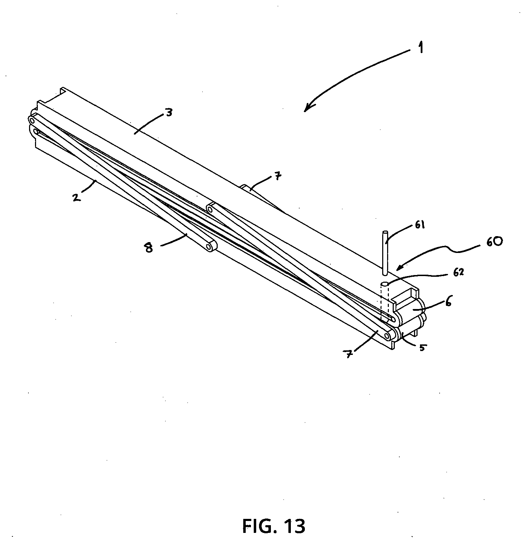

Figure 13 shows a locking device 60 to ensure that the raising and lowering device for supporting load according to the present invention is not lowered/raised unintentionally, for example during transport on vehicles in which the raising and lowering device 1 for supporting load through the locking device 60 is locked in a certain position, such as a collapsed or retracted position.

The locking device 60 comprises a locking pin 61 and a locking hole 62 formed at least in the first and second beam 2, 3, but it should be understood that also the first profile element 5 and/or the second profile element 6 may be formed with locking holes 62. The locking pin 61 and locking hole 62 will suitably interact with one another to permit locking or unlocking of the locking device 60.

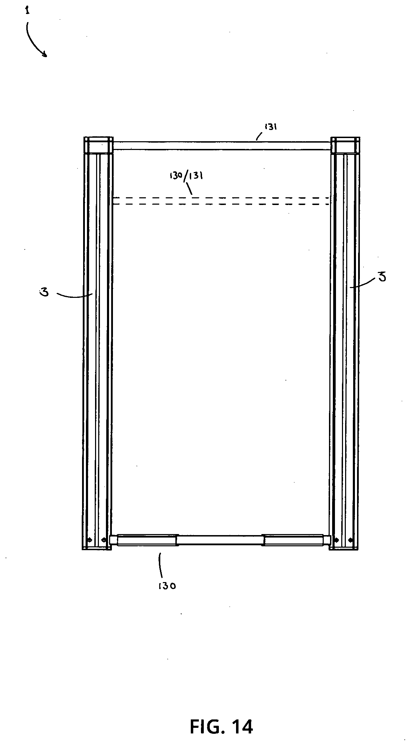

Figure 14 shows an embodiment of a raising and lowering device 1 for supporting load according to the present invention, where the raising and lowering device 1 is connected and braced with two coupling devices, a front coupling device 130, and a rear coupling device 131, where the raising and lowering device 1 is shown in a collapsed position and seen from above. A person skilled in the art will understand that the raising and lowering device 1 for supporting load in some cases may include more such coupling devices, where these can be provided between the front and rear coupling devices 130, 131, as for example shown by the two dotted lines.

The coupling devices 130, 131 are, in one embodiment, designed to be telescopic, so that the distance between the left and right second beam 3 can be made shorter or longer. Each coupling device 130, 131 comprises two tubes 130A, 130B; 131A, 131B, where one tube 130A, 131A is arranged in the other tube 130B, 131B, and a locking mechanism, so that the coupling devices 130, 131, can be locked in a desired position.

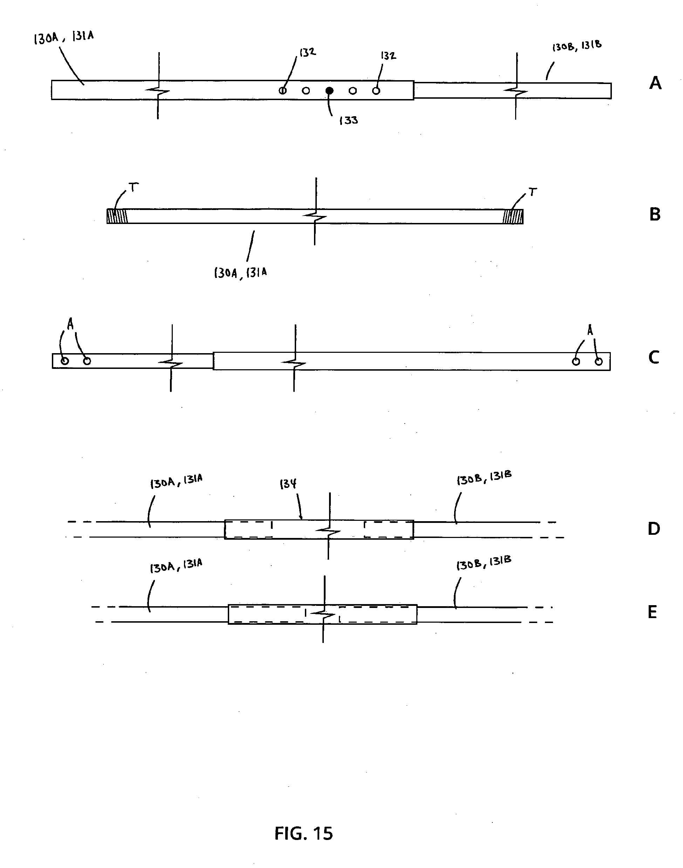

Such a coupling device 130, 131 can be designed in many different ways, as shown in figures 15A-15C, where figure 15A shows an embodiment where one of the tubes 130A, 131A is formed with a plurality of spaced holes 132 along its length and the second tube 130B, 131B is formed with a spring loaded pin or locking pin 133. Each end of a coupling device 130, 131 will be further configured with threads T, holes A, or the like, see also figures 15B-15C, so as to be suitably connected to the left and right second beam 3 (front coupling device 130), and the left and right second profile element 6 (rear coupling device 131).

In an alternative embodiment, each connecting device 130, 131 may, as shown in figures 15D-15E, comprise a connecting sleeve 134, where the connecting sleeve 134 connects the tubes 130A, 130B; 131A, 131B. The connecting sleeve 134 may then on an inside being provided with internal threads (not shown), while one end of each tube 130A, 130B; 131A, 131B which is to be connected to the connecting sleeve 134 then is provided with external threads (not shown), so as to be connected with the connecting sleeve 134. The threads are formed internally in the connecting sleeve can be provided throughout the entire connecting sleeve 134, or they may be arranged in each end of the connecting sleeve 134 and extending a distance inward in the connecting sleeve 134.

Figure 15E shows that the tubes 130A, 130B; 131A, 131B are screwed into the connecting sleeve 134, whereby the distance between the first two profile elements 5/the two first beams 2 shown in figure 14 is made smaller.

Figure 15B shows an embodiment where only a single tube or rod 130, 131 is used. In this case, the raising and lowering device 1 for supporting load cannot be adjusted.

The tubes 130, 131 are, towards their ends that are to be connected with the first profile element 5/the first beam 2, are provided with threads T, slots A, or the like, so as to be connected with these.

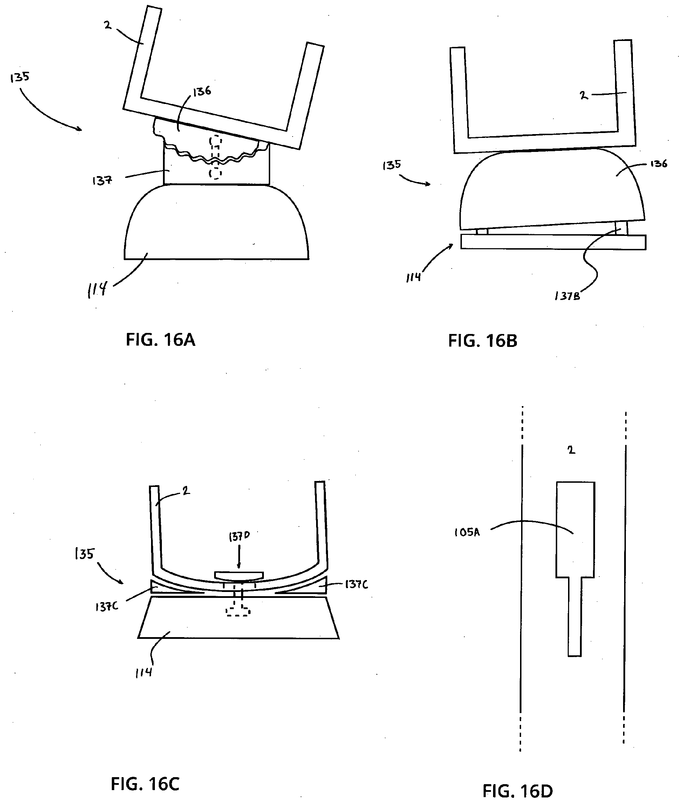

Figures 16A-16D illustrates alternative angular adjustment devices 135 in order to be able to adjust the angle of the raising and lowering device 1 for supporting load relative a roof 112 of the vehicle and a design of the first beam 2 to be connected with a load base holder 114.

Figure 16A shows an embodiment of the angular adjustment device 135, where the angular adjustment device 135 comprises a bracket 136 which is suitably connected to a lower side of the first beam 2 and a cooperating back stop 137A which is suitably connected to the load base holder 114, such that the bracket 136 can be set with an angle relative the back stop 137A and by means of a locking device 137d are locked in a desired position.

The bracket 136 and the back stop 137A are formed with a number of complementary and mating teeth, which through the locking device 137D can be locked in a desired position between them.

Figure 16B shows an alternative embodiment of the angle adjusting device 135, in which a bracket 136 is connected to the first beam 2 and is formed with a plurality of holes, and a cooperating back stop 137B in the form of screws, bolts or the like which is connected to the load base holder 114. By tightened one or more screws or bolts, the first beam 2 is angled in relation to the load base holder 114.

Figure 16C illustrates a further embodiment of the angular adjustment device 135, where the first beam 2 on a side facing towards the load base holder 114 is formed curved so that it can be angled in relation to the load base holder 114. When using wedges 137C, which are arranged between the first beam 2 and the load base holder 114, the first beam 2 can, by means of a locking device 137D in the load base holder 114, be fixedly locked at a desired angle relative the load base holder 114.

Figure 16D shows how the slit or slot 105A of the first beam 2 can be designed to allow an adjustment or an angling of the first beam 2 relative the load base holder 114, where the slit or slot 105A is formed with a wider area which permits the angling of the first beam 2 about the locking device 137D and in relation to the load base holder 114.

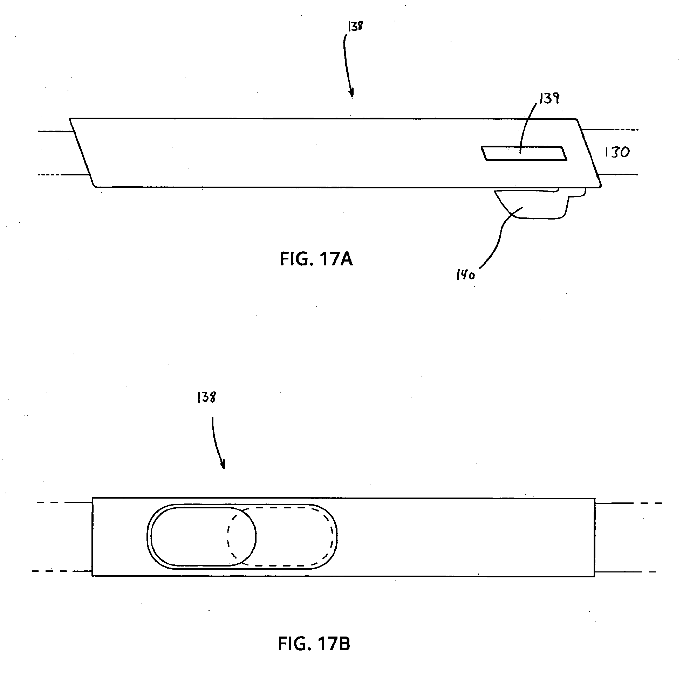

Figures 17A-17C show embodiments of a release system 138 for releasing the locks of a locking device for the raising and lowering device 1 for supporting load according to the present invention, as the raising and lowering device 1 for supporting load in its collapsed position through the locking device is locked to prevent accidental withdrawal, in its extended position is locked to prevent accidental insertion and in a position between the collapsed and expanded position is locked, before the rotation starts, to ensure a correct rotation.

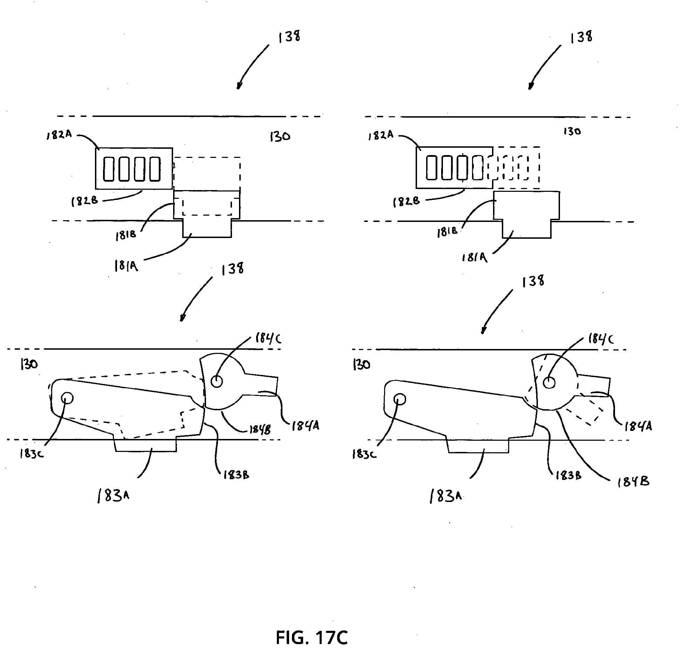

Figure 17A shows that the release system 138 is arranged on the front coupling device 130 and can be in the form of a handle, a sleeve or tube 130, 131, where the release system 138 comprises a first button 139 and second button 140, where the release system 138 is so formed that release of the locking device and the different locks of the locking device in the locked raising and lowering device 1 can only take place by successive activation of buttons 139, 140, and will not function if the buttons 139, 140 are operated simultaneously, as shown in figure 17C.

The buttons 139, 140 may be designed as push button 139, rotating button 140, or as pushing or sliding buttons (figure 16B).

Figure 17C shows a principle drawing of embodiments to prevent the push button 181 and pushing or sliding button 181 are activated simultaneously, where it can be seen that when, for instance, the push button 181 is activated, a surface 181B at the push button 181 will block the pushing or sliding button 182 can be shifted against right in the figure. Similarly, a surface 182B at the pushing or sliding button 182 will block the activation of push button 181 when the pushing or sliding button 182 has been displaced to the right in the figure.

In an alternative embodiment are 183, 184 shown as rotation buttons. The rotation button 183 is rotatably mounted about a rotation point 183C and the rotation button 184 is pivotally mounted about a rotation point 184C. When the rotation button 183 is activated and rotated about the rotation point 183C, a surface 183b at the rotation button 183 will block for the activation and rotation of the rotation button 184. Similarly, a surface 184b at the rotation button 184 at an activation and rotation of this block for rotation of the rotation button 183.

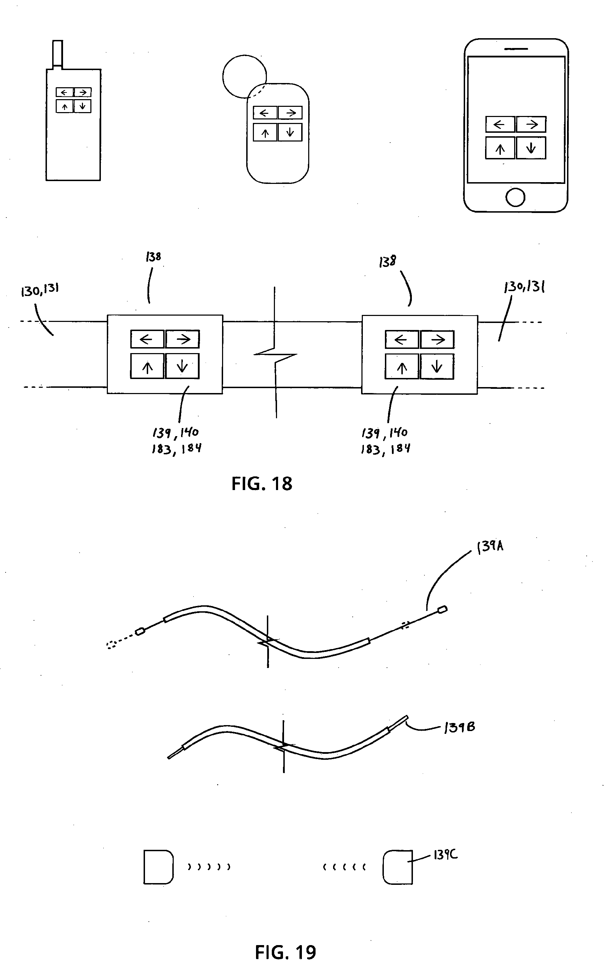

A person skilled in the art will understand that the actuating system 138, as an additional security, may comprise two sets of buttons, so that the user must use both hands to activate a lock in the locking device, as shown at the bottom of figure 18, where it can be seen that the actuating system 138 comprises one set of buttons for the left hand and one set of buttons for the right hand, whereby a lock in the locking device will first be brought out of engagement when two cooperating buttons are activated. A person skilled in the art will know how such a release system may be arranged and is thus not described further herein.

A person skilled in the art will understand that the actuating system 138 also can be designed for wireless activation, where the release system 138 then may be constituted by a separate electronic unit in the form of a mobile phone, a deployment unit etc.

Figure 19 shows alternative embodiments of the connection between the release system 138 for releasing of the locks and the locks 141, 151, 161 of the locking device of the raising and lowering device 1 for supporting load, where the release system 138 may be connected to the locks 141, 151, 161 through a wire or rod 139A, through wire 139b for signal transmission or also through a wireless system 139C.

By signal transmissions via wire or wireless, one or more actuators in the form of a motor, cylinder or the like may be connected to the locks 141, 151, 161 in the locking device to lock up and/or lock these.

A person skilled in the art will know how the connection between the release system 138 and the locks 141, 151, 161 in the locking device of the raising and lowering device 1 for supporting load to be performed, be it if connection is mechanical or electrical and this will thus not be described further herein.

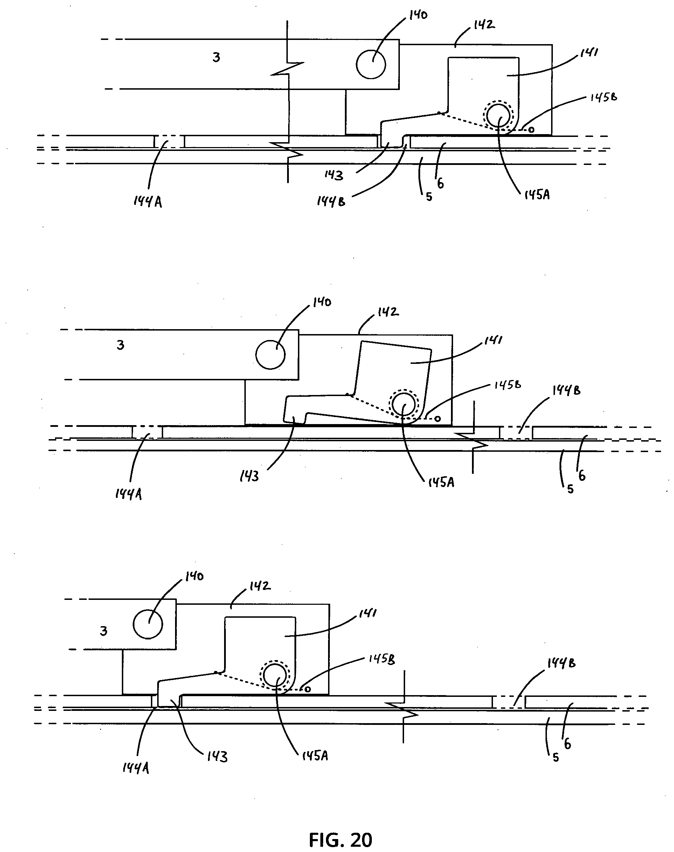

Figures 20A-20C show a locking device for locking the raising and lowering device 1 for supporting load according to the present invention, where the locking device comprises a first lock 141 which is used to lock the second beam 3 to the second profile element 6 when the raising and lowering device 1 for supporting load is in a stowed position, so as to prevent unintentional withdrawal of the raising and lowering device 1 for supporting load. The first lock 141 will also be used to lock the second beam 3 and the second profile element 6 together when the raising and lowering device 1 for supporting load has reached a certain position by withdrawal of the raising and lowering device 1 for supporting load from a collapsed position to an expanded position, as after locking only to allow a rotation between the second beam 3 and the second profile element 6 by further pullout of the raising and lowering device 1 for supporting load. Similarly, the first lock 141 will lock the second beam 3 and the second profile element 6 together only to allow a rotation between the second beam 3 and the second profile element 6 until the raising and lowering device 1 for supporting load has reached a certain position, when the raising and lowering device 1 is brought from the extended to the collapsed position, whereby the first lock 141 is released by the release mechanism 138, whereafter the second beam 3 and the second profile element 6, by further insertion of the raising and lowering device 1 can both rotate and slip or slide relative each other.

The first lock 141 is arranged in a housing or carriage 142, where the house or carriage 142 through a pivot connection 140 is connected to the second beam 3.

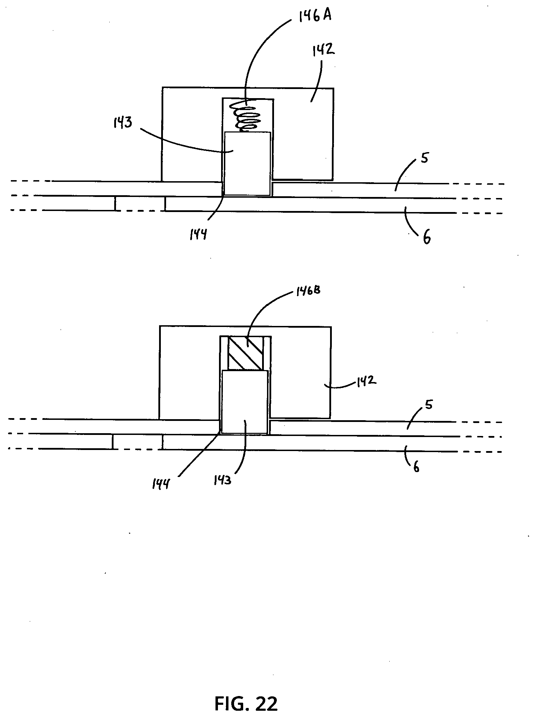

The locking device further comprises a second lock 151 and a third lock 161 which are to be described further below in connection with figures 22A-22E, 23A-23C and 24A-24B.

In figure 20A the raising and lowering device 1 for supporting load is shown in a stowed and locked position in order to prevent unintentional withdrawal of the raising and lowering device 1, where the second beam 3 in this stowed position will be locked to the second profile element 6 in that a locking pin 143 of the first lock 141 is dropped into a first recess or groove 144B formed in the second profile element 6. The first lock 141 is further, through a pivot connection 145A and a spring 145B, rotatably connected to the housing or carriage 142. When the locking pin 143 of the first lock 141 by means of the actuating system 138 and the connection 139A, 139B or 139C is brought out of engagement with the recess or groove 144B, the second beam 3 can be displaced horizontally along the second profile element 6 (to the left the figures), and the raising and lowering device 1 for supporting load could be pulled out from its stowed position, as shown in figure 20B, where the second beam 3, housing or carriage 142 and the first lock 141 have been drawn out to left in the figure. When the second beam 3 has been fully drawn out relative the second profile element 6, the locking pin 143 will fall into a second recess or groove 144A formed in the second profile element 6, whereby the second beam 3 will be locked to the second profile element 6 and thus could not slip or slide relative the second profile element 6, but where the second beam 3 through the pivot joint 140, only is permitted to rotate relative the second profile element 6. The spring 145B which is adapted to be biased, will then force the locking pin 143 of the first lock 141 in abutment with the first/second recess or groove 144B, 144A when the locking pin 143 is aligned with the first/second recess or groove 144B, 144A.

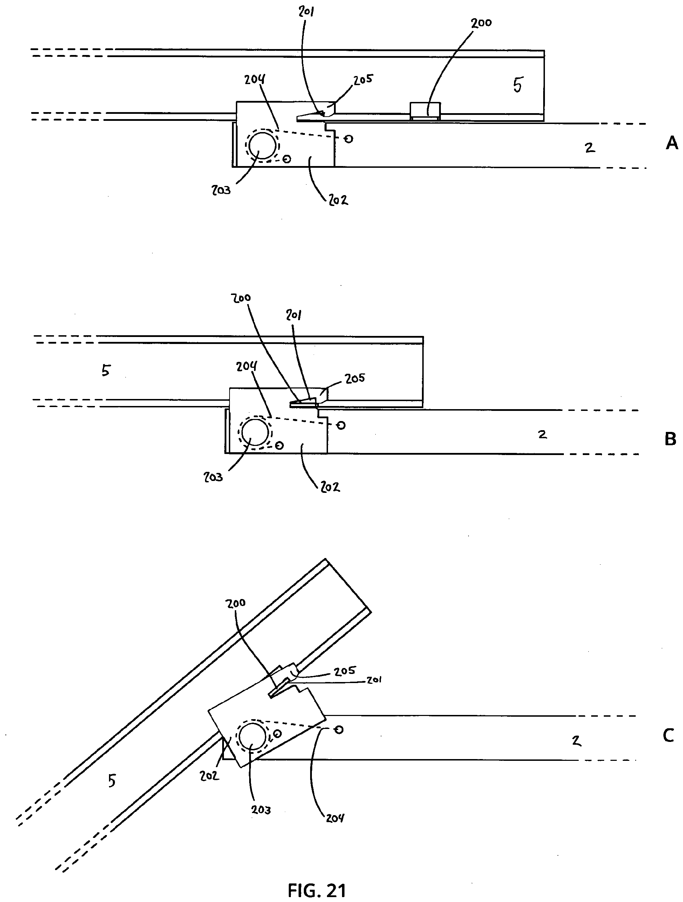

Figure 21 shows an alternative embodiment of the locking device and the first lock according to figures 20A-20C, where the first profile element 5 towards one end is formed with a pin, bolt 200 or the like, which pin 200 engages with a groove or slot 201 formed in a rotating element 202 connected at one end of the first beam 2. The rotating element 202 and the first beam 2 are connected by a pivot connection 203. A spring 204 is further, about the pivot connection 203, through one of its ends connected to the first beam 2 and through its other end connected to the rotary member 202.

In figure 21A, the raising and lowering device 1 for supporting load, will be brought from a collapsed position to an extended position, whereby an user starts to drag out the raising and lowering device 1 for supporting load. The first profile element 5 will then be moved relative the first beam 2, towards the left in figure 21A, and the first profile element 5 will then be moved parallel with the first beam 2 (which is rigidly connected to a roof of a vehicle).

When the first profile element 5 has been pulled so far out that it has come to an end of the first beam 2, the pin 200 will be brought into engagement with the slot or groove 201 in the rotating element 202, see figure 21B, so that the first profile element 5 is locked to the rotary member 202.

Figure 21C shows a further extraction of the raising and lowering device 1 for supporting load, towards an extended position, where the first profile element 5 through the pin 200 and the slot or groove 201 of the rotary member 202 is locked on to this, whereby the rotary member 202 (and thus also the first profile element 5) through the pivot joint 203 has begun to rotate about the first beam 2. The slot or groove 201 is formed with a barb 205 to prevent the pin 200 unintentionally is released out of the slot or groove 201.

The pin 200 is released from the barb 205 when the raising and lowering device 1 for supporting load lies flat for insertion into a collapsed position.

A person skilled in the art will understand that alternatives to the first lock 141 of figures 20A-20C can be used, for example as shown in figures 22A-22B, where figure 22A shows use of a house or carriage 142 and in this arranged a locking pin 143. A spring 146A is then arranged between a back stop in the house or carriage 142 and locking pin 143, where said spring 146A will push the locking pin 143 into the recess or groove 144 that is formed in the second profile element 6. In order to bring the locking pin 143 out of engagement with the recess or groove 144, the release system 138, as described above, is used.

Still another alternative embodiment of the first lock 141 is shown in figure 22B, where an actuator in the form of a motor 146B or similar could be used to bring the locking pin 143 out of engagement with the recess or groove 144 formed in the second profile element 6, or alternatively pushing the locking pin 143 into engagement with the recess or slot 144. In these embodiments, the locking device may be connected with the above described release system 138.

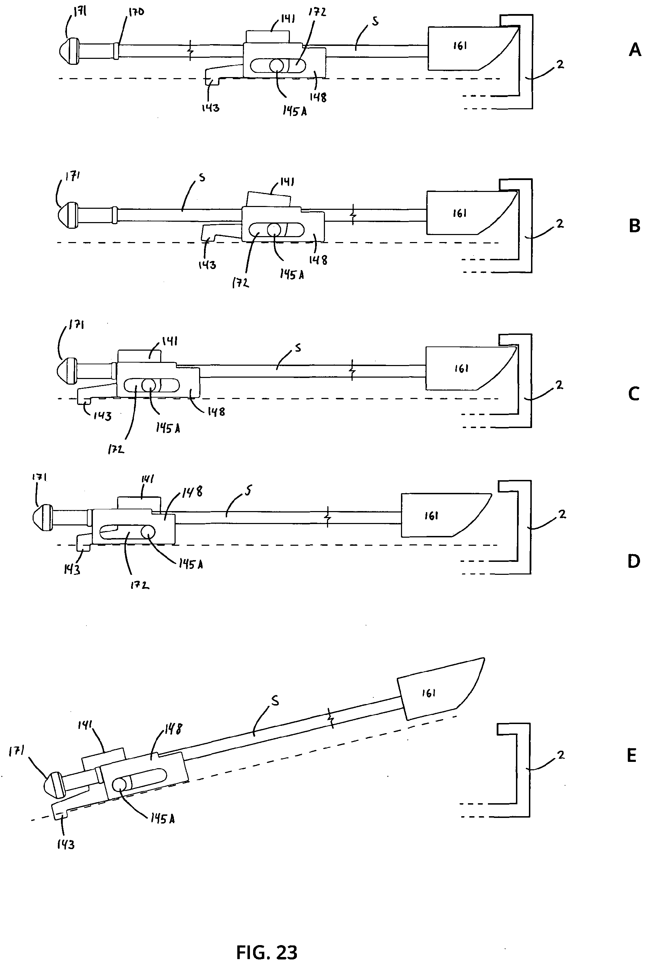

Figures 23A-23E show further details of the locking assembly, where the raising and lowering device 1 for supporting load of figure 23A is shown in an assembled and locked position. The first lock 141 will then be locked to the first recess or groove 144B formed in the second profile element 6.

In Figure 23B, the first lock 141 is brought out of engagement with the recess or groove 144B by means of the actuating system 138 and connection 139A, 139B or 139C and the second beam 3 has been displaced along the second profile element 6, as shown in figure 22C, where the locking pin 143 of the first lock 141 will be brought into engagement with the other recess or slot 144A formed in the second profile element 6.

A third latch 161 in locking device has meanwhile locked and kept the second profile element 6 and the first beam 2 in the same plane, so that these have not been able to rotate relative each other (i.e. form an angle between them).

In figure 23D is shown that the third lock 161, by means of the release system 138 and the connections 139A, 139B or 139C, has been released out of engagement with the second profile element 6, whereby the first and the second profile element 5, 6 can start to rotate relative the first beam 2.

For the sake of simplicity, and in order to explain the locking means in detail, only the locking device shown in these figures.

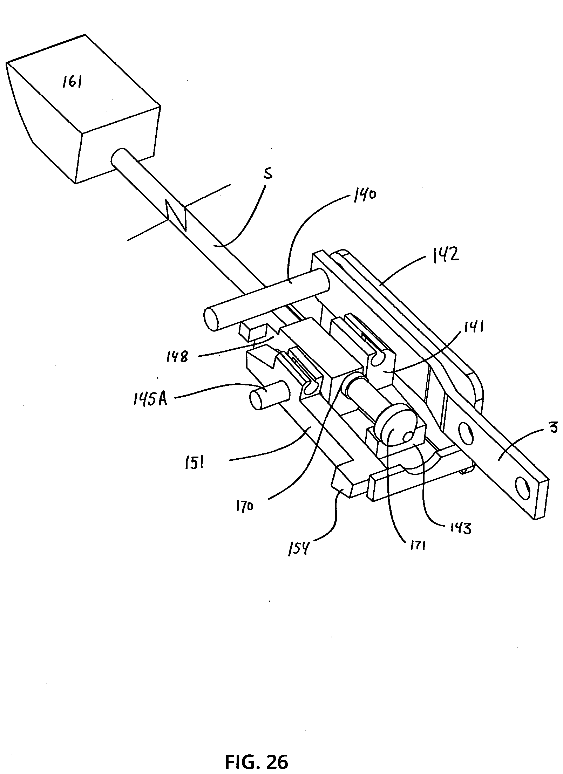

For further explanation of figures 23A-23E, it is also referred to figure 26, where it can be seen that the third lock 161 is connected to a rod S. The rod S is at an opposite end of the connection with the third lock 161 formed with a stop element 170 for the guiding element 148 and an element 171 that prevents release of locking pin 143 of the first lock 141. The guiding element 148 is further formed with a slot 172 that allows the pivot joint 145A to travel a distance in the guiding element 148.

In Figure 23C, the raising and lowering device 1 for supporting load has been brought to a position where the first lock 141 has gone into engagement with the second recess 144A (see also figure 20C), where the guiding element 148 through this movement and travel along the rod S has been brought into abutment against the stopper element 170 formed on the rod S. In this position the locking pin 143 of the first lock 141 can still be released out of the second recess 144A.

However, in figure 23D, the third lock 161 will, by means of the release mechanism 138 and the connection 139A, 139B or 139C, be released and brought out of engagement with the second beam 2, where the third lock 161 and the rod S at this release moves to the left in the figure. The movement of the rod S will result in that also the guide member 148 moves, whereby one end of the slot 172 is brought into contact with the pivot joint 145A.

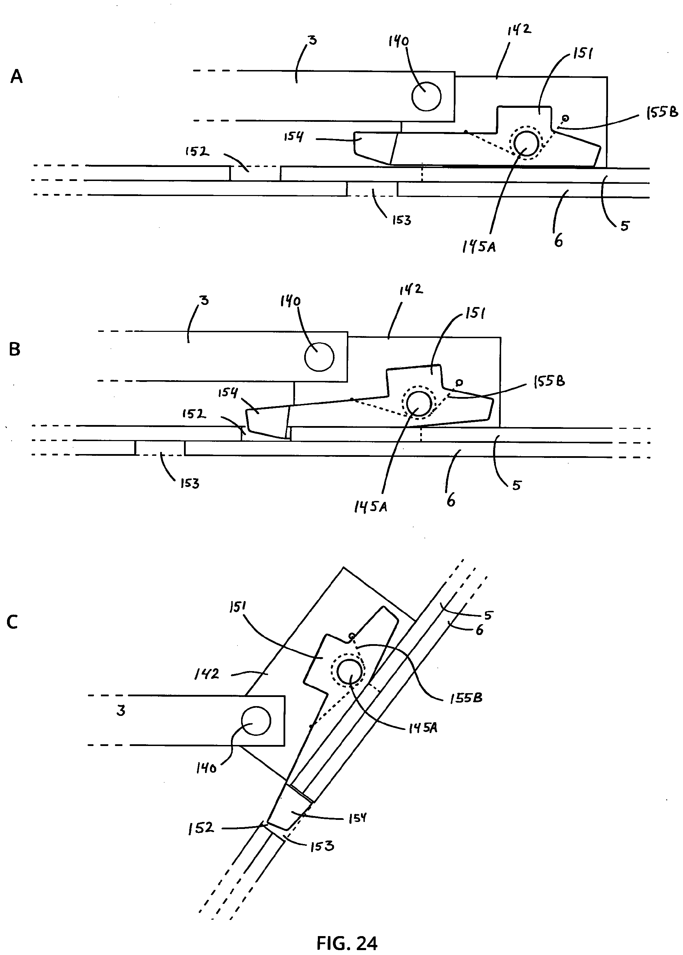

Figures 24A-24C show a second lock 151 in the locking device arranged between the first profile element 5 and the second profile member 6, in three positions. The second lock 151 is arranged in the same house or carriage 142 as the first lock 141, and the second lock 151 prevents sliding between the first profile element 5 and the second profile element 6, and has its incidence in a recess or groove 152, 153 formed in the first and second profile element 5, 6, when the system is in an extended position. The second lock 151 is further, through the pivot joint 145A and a spring 155B, connected to the housing or carriage 142. The first and second lock 141, 151, will then be connected to the housing or carriage 142 through the same pivotal connection 145A.

When the second beam 3 is rotated relative the first beam (see figure 23E), and the release mechanism 138 is released, the third lock 161, the rod S and the guide element 148 move to the right, whereby this will result in that an opposite end of the slot 172 (opposite of shown in figure 23D) is brought into contact with the pivot joint 145A. When this end of the slot 172 is in contact with the pivot joint 145A, the element 171 that prevents release of the locking pin 143 of the first lock 141 may be provided above the locking pin 143. The second beam 3 will now be fixedly locked to the second profile element 6 so that it allows only a rotational movement between the second beam 2 and the second profile element 6, as described in relation to figures 20A-20C.

Figure 24A shows the second lock 151 heading towards an extended position of the raising and lowering device 1 for supporting load, figure 24B shows the position of the second lock 151 while the raising and lowering device 1 has moved past a roof 112 of a vehicle, and on way down to its extended position, and figure 24C the raising and lowering device 1 in an extended position where the second lock 151 has been brought into engagement with recesses or grooves 152, 153 in the first and second profile element 5, 6.

The second latch 151 will, when a locking tap 154 of this, through the spring 155B, is brought into engagement with recesses or grooves 152, 153, prevent the first and second profile element 5, 6 to move relative one another when the raising and lowering device 1 for supporting load is brought to its extended position.

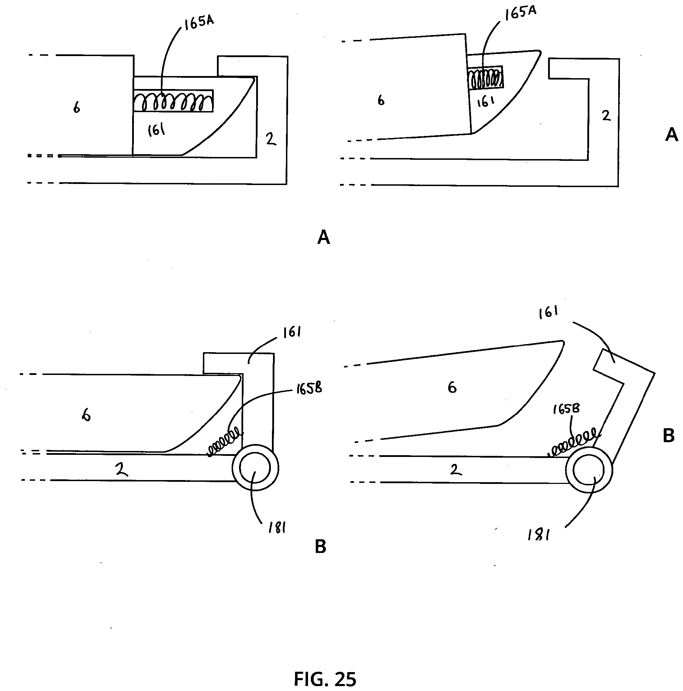

Figure 25 shows further details of the third lock 161 in the locking device. The third lock 161 will lock the second profile element 6 and the first beam 2, so that these cannot be rotated relative each other, and is located close to the coupling between strut 8 and the second profile element 6.

In figure 25A, the lock is formed as an extension of the second profile element 6, where it between the third lock 161 and the second profile element 6 is provided a pretensioned spring 165A which will tend to push the third lock 161 in engagement with the second beam 2. The third lock 161 could be released by means of the release system 138 and the connections 139A, 139B or 139C as described above and is released at a position as described in relation to figure 23D.

Figure 25 B shows an alternative embodiment of the third lock 161, where the third lock 161 in this embodiment, through a pivot joint 181, is pivotally connected to the first beam 2. A pretensioned spring 165B is connected between the third lock 161 and the first beam 2, whereby the pretensioned spring 165B will seek to force the third lock 161 into engagement with the second profile element 6. The third lock 161 could be released by means of the release system 138 and connections 139A, 139B or 139C as described above and is released at a position as described in relation to figure 23D.

The present invention has now been explained with reference to several nonlimiting embodiments. A person skilled in the art will understand, however, that there can be performed a number of variations and modifications of the raising and lowering device for supporting load as described within the scope of the invention as defined in the appended claims.

## Claims

1. A raising and lowering device (1) for supporting load, where the raising and lowering device (1) comprises a first beam (2) and a second beam (3), where a first profile element (5) is slidably connected to the first beam (2) and a second profile element (6) is slidably connected to the second beam (3), said first and second profile elements (5, 6) are in slidable contact with each other, where said first profile element (5) further, through at least one strut (7), is connected to the second beam (3), while the second profile element (6), through strut (8), is connected to the first beam (2), wherein the first and the second beam (2, 3) are movable relative each other between a retracted position and an extended position of the raising and lowering device (1).

2. Raising and lowering device (1) for supporting load in accordance with claim 1, **characterized in that** each strut (7) through a pivot connection (9) is rotatably mounted with the second beam (3) and the first profile element (5), while each strut (8) is rotatably mounted to the first beam (2) and the second profile element (6).

3. Raising and lowering device (1) for supporting load according to one or more of the preceding claims, **characterized in that** the first and second beam (2, 3) is formed with a guiding means for a control device connected to each of the first and the second profile element (5, 6).

4. Raising and lowering device (1) for supporting load according to one or more of the preceding claims, **characterized in that** the first and second profile element (5, 6) is formed with a guiding means for a control device connected to each of the first and the second beam (2, 3).

5. Raising and lowering device (1) for supporting load according to one or more of the preceding claims, **characterized in that** the first profile element (5) is formed with at least one guide means for receiving at least one control device arranged in the second profile element (6), or that the second profile element (6) is formed with at least one guide means for receiving at least one control device arranged in the first profile element (5).

6. Raising and lowering device (1) for supporting load according to one or more of the preceding claims 3-5, **characterized in that** the guiding means extends substantially along a length of the first beam (2) and the second beam (3) and/or along a length of the first profile element (5) and the second profile element (6).

7. Raising and lowering device (1) for supporting load according to one or more of the preceding claims 3 to 6, **characterized in that** the guide means consist of slits, grooves (4) or the like, while the control device consists of a bolt, pin (10), sliding element (11), carriage (142) or the like.

8. Raising and lowering device (1) for supporting load according to claim 1, **characterized in that** the first profile element (5) is arranged for receiving of the second profile element (6) or vice versa.

9. Raising and lowering device (1) for supporting load according to one or more of the preceding claims, **characterized in that** each of the first and the second profile element (5, 6) at one end is connected with a sliding element (11).

10. Raising and lowering device (1) for supporting load according to any one of claims 7 or 9, **characterized in that** the sliding element (11) comprises a first part (11B) and a second part (11A), where the first part (11B) is connected to the second part (11A) through a pivot connection (11C).

11. Raising and lowering device (1) for supporting load according to one or more of the preceding claims, **characterized in that** each of the first and the second beam (2, 3) comprises a stop means (44) for the control device.

12. Raising and lowering device (1) for supporting load according to one or more of the preceding claims 1-9, **characterized in that** the raising and lowering device (1) comprises at least one auxiliary device (124, 125, 126) in form of torque spring (s), one or more gas cylinders, clock spring (s), motor (s) or the like, to facilitate handling of the raising and lowering device (1).

13. Raising and lowering device (1) for supporting load according to one or more of the preceding claims, **characterized in that** the raising and lowering device (1) further comprises at least one locking device (60, 61, 62, 141, 151, 161, 202) to prevent unwanted movement.

14. Raising and lowering device (1) for supporting load according to one or more of the preceding claims, **characterized in that** the «tilting strut" (7A) is pivotally connected to the first profile element (5) and/or struts (7).

15. Raising and lowering device (1) for supporting load according to one or more of the preceding claims, **characterized in that** the raising and lowering device (1) comprises a front and a rear coupling device (130, 131).

16. Raising and lowering device (1) for supporting load according to one or more of the preceding claims, **characterized in that** the first and the second profile element (5, 6) are rigidly connected to each other.

17. A system for supporting the load, **characterized in that** the system comprises one or more raising and lowering devices (1) for supporting load according to any one of claims 1-16.

## Patentansprüche

1. Hebe- und Senkvorrichtung (1) zum Tragen von Lasten, wobei die Hebe- und Senkvorrichtung (1) einen ersten Träger (2) und einen zweiten Träger (3) aufweist, wobei ein erstes Profilelement (5) verschiebbar mit dem ersten Träger (2) verbunden ist und ein zweites Profilelement (6) verschiebbar mit dem zweiten Träger (3) verbunden ist, wobei das erste und das zweite Profilelement (5, 6) verschiebbar miteinander in Kontakt sind, wobei das erste Profilelement (5) ferner durch mindestens einen Holm (7) mit dem zweiten Träger (3) verbunden ist, wobei das zweite Profilelement (6) durch einen Holm (8) mit dem ersten Träger (2) verbunden ist, und wobei der erste und der zweite Träger (2, 3) relativ zueinander zwischen einer eingefahrenen Stellung und einer ausgefahrenen Stellung der Hebe- und Senkvorrichtung (1) bewegbar sind.

2. Hebe- und Senkvorrichtung (1) zum Tragen von Lasten nach Anspruch 1, **dadurch gekennzeichnet, dass** jeder Holm (7) über eine Schwenkverbindung (9) drehbar mit dem zweiten Träger (3) und dem ersten Profilelement (5) verbunden ist, und wobei jeder Holm (8) drehbar an dem ersten Träger (2) und dem zweiten Profilelement (6) befestigt ist.

3. Hebe- und Senkvorrichtung (1) zum Tragen von Lasten nach einem der vorhergehenden Ansprüche, **dadurch gekennzeichnet, dass** der erste und der zweite Träger (2, 3) mit einer Führungseinrichtung für eine Steuereinrichtung versehen sind, die jeweils mit dem ersten und dem zweiten Profilelement (5, 6) verbunden ist.

4. Hebe- und Senkvorrichtung (1) zum Tragen von Lasten nach einem der vorhergehenden Ansprüche, **dadurch gekennzeichnet, dass** das erste und das zweite Profilelement (5, 6) mit einer Führungseinrichtung für eine Steuereinrichtung versehen sind, die jeweils mit dem ersten und dem zweiten Träger (2, 3) verbunden ist.

5. Hebe- und Senkvorrichtung (1) zum Tragen von Lasten nach einem der vorhergehenden Ansprüche, **dadurch gekennzeichnet, dass** das erste Profilelement (5) mit mindestens einer Führungseinrichtung zur Aufnahme mindestens einer Steuereinrichtung, die in dem zweiten Profilelement (6) angeordnet ist, versehen ist, oder dass das zweite Profilelement (6) mit mindestens einer Führungseinrichtung zur Aufnahme mindestens einer Steuereinrichtung, die in dem ersten Profilelement (5) angeordnet ist, versehen ist.

6. Hebe- und Senkvorrichtung (1) zum Tragen von Lasten nach einem der vorhergehenden Ansprüche 3 - 5, **dadurch gekennzeichnet, dass** die Führungseinrichtung sich im Wesentlichen entlang einer Länge des ersten Trägers (2) und des zweiten Trägers (3) und/oder entlang einer Länge des ersten Profilelements (5) und des zweiten Profilelements (6) erstreckt.

7. Hebe- und Senkvorrichtung (1) zum Tragen von Lasten nach einem der vorhergehenden Ansprüche 3 - 6, **dadurch gekennzeichnet, dass** die Führungseinrichtung aus Schlitzen, Nuten (4) oder dergleichen besteht, wobei die Steuereinrichtung aus einer Schraube, einem Stift (10), einem Schiebeelement (11), einem Schlitten (142) oder dergleichen besteht.

8. Hebe- und Senkvorrichtung (1) zum Tragen von Lasten nach Anspruch 1, **dadurch gekennzeichnet, dass** das erste Profilelement (5) zur Aufnahme des zweiten Profilelements (6), oder umgekehrt, ausgebildet ist.

9. Hebe- und Senkvorrichtung (1) zum Tragen von Lasten nach einem der vorhergehenden Ansprüche, **dadurch gekennzeichnet, dass** das erste und das zweite Profilelement (5, 6) jeweils an einem Ende mit einem Schiebeelement (11) verbunden sind.

10. Hebe- und Senkvorrichtung (1) zum Tragen von Lasten nach Anspruch 7 oder 9, **dadurch gekennzeichnet, dass** das Schiebeelement (11) einen ersten Teil (11B) und einen zweiten Teil (11A) aufweist, wobei der erste Teil (11B) über eine Schwenkverbindung (11C) mit dem zweiten Teil (11A) verbunden ist.

11. Hebe- und Senkvorrichtung (1) zum Tragen von Lasten nach einem der vorhergehenden Ansprüche, **dadurch gekennzeichnet, dass** der erste und der zweite Träger (2, 3) jeweils eine Stoppeinrichtung (44) für die Steuereinrichtung aufweisen.

12. Hebe- und Senkvorrichtung (1) zum Tragen von Lasten nach einem der vorhergehenden Ansprüche 1 - 9, **dadurch gekennzeichnet, dass** die Hebe- und Senkvorrichtung (1) mindestens eine Hilfseinrichtung (124, 125, 126) in Form einer oder mehrerer Drehmomentfedern, eines oder mehrerer Gaszylinder, einer oder mehrerer Drehfedern, eines oder mehrerer Motoren oder dergleichen, aufweist, um die Handhabung der Hebe- und Senkvorrichtung (1) zu erleichtern.

13. Hebe- und Senkvorrichtung (1) zum Tragen von Lasten nach einem der vorhergehenden Ansprüche, **dadurch gekennzeichnet, dass** die Hebe- und Senkvorrichtung (1) ferner mindestens eine Verriegelungseinrichtung (60, 61, 62, 141, 151, 161, 202) zur Verhinderung einer unerwünschten Bewegung aufweist.

14. Hebe- und Senkvorrichtung (1) zum Tragen von Lasten nach einem der vorhergehenden Ansprüche, **dadurch gekennzeichnet, dass** ein Neigungsholm (7A) schwenkbar mit dem ersten Profilelement (5) und/oder den Holmen (7) verbunden ist.

15. Hebe- und Senkvorrichtung (1) zum Tragen von Lasten nach einem der vorhergehenden Ansprüche, **dadurch gekennzeichnet, dass** die Hebe- und Senkvorrichtung (1) eine vordere und eine hintere Kopplungseinrichtung (130, 131) aufweist.

16. Hebe- und Senkvorrichtung (1) zum Tragen von Lasten nach einem der vorhergehenden Ansprüche, **dadurch gekennzeichnet, dass** das erste und das zweite Profilelement (5, 6) starr miteinander verbunden sind.

17. System zum Tragen von Lasten, **dadurch gekennzeichnet, dass** das System eine oder mehrere Hebe- und Senkvorrichtungen (1) zum Tragen von Lasten nach einem der Ansprüche 1 - 16 aufweist.

## Revendications

1. Dispositif de levage et d'abaissement (1) pour supporter une charge, dans lequel le dispositif de levage et d'abaissement (1) comprend une première poutre (2) et une seconde poutre (3), dans lequel un premier élément profilé (5) est raccordé, de manière coulissante, à la première poutre (2) et un second élément profilé (6) est raccordé, de manière coulissante, à la seconde poutre (3), lesdits premier et second éléments profilés (5, 6) sont en contact coulissant entre eux, dans lequel ledit premier élément profilé (5) est en outre raccordé, par l'intermédiaire d'au moins une entretoise (7), à la seconde poutre (3), alors que le second élément profilé (6) est raccordé, par le biais d'une entretoise (8), à la première poutre (2), dans lequel la première et la seconde poutre (2, 3) sont mobiles l'une par rapport à l'autre entre une position rétractée et une position déployée du dispositif de levage et d'abaissement (1).

2. Dispositif de levage et d'abaissement (1) pour supporter une charge selon la revendication 1, **caractérisé en ce que** chaque entretoise (7), par l'intermédiaire d'un raccordement à pivot (9), est montée de manière rotative avec la seconde poutre (3) et le premier élément profilé (5), alors que chaque entretoise (8) est montée, de manière rotative, sur la première poutre (2) et le second élément profilé (6).

3. Dispositif de levage et d'abaissement (1) pour supporter une charge selon une ou plusieurs des revendications précédentes, **caractérisé en ce que** les première et seconde poutres (2, 3) sont formées avec un moyen de guidage pour un dispositif de commande raccordé à chacun parmi le premier et le second élément profilé (5, 6).

4. Dispositif de levage et d'abaissement (1) pour supporter une charge selon une ou plusieurs des revendications précédentes, **caractérisé en ce que** les premier et second éléments profilés (5, 6) sont formés avec un moyen de guidage pour un dispositif de commande raccordé à chacune parmi la première et la seconde poutre (2, 3).

5. Dispositif de levage et d'abaissement (1) pour supporter une charge selon une ou plusieurs des revendications précédentes, **caractérisé en ce que** le premier élément profilé (5) est formé avec au moins un moyen de guidage pour recevoir au moins un dispositif de commande agencé dans le second élément profilé (6), ou bien **en ce que** le second élément profilé (6) est formé avec au moins un moyen de guidage pour recevoir au moins un dispositif de commande agencé dans le premier élément profilé (5).

6. Dispositif de levage et d'abaissement (1) pour supporter une charge selon une ou plusieurs des revendications 3 à 5, **caractérisé en ce que** le moyen de guidage s'étend sensiblement le long d'une longueur de la première poutre (2) et de la seconde poutre (3) et/ou le long d'une longueur du premier élément profilé (5) et du second élément profilé (6).

7. Dispositif de levage et d'abaissement (1) pour supporter une charge selon une ou plusieurs des revendications 3 à 6, **caractérisé en ce que** le moyen de guidage se compose de fentes, de rainures (4) ou similaires, alors que le dispositif de commande est composé d'un boulon, d'une broche (10), d'un élément coulissant (11), d'un chariot (142) ou similaire.

8. Dispositif de levage et d'abaissement (1) pour supporter une charge selon la revendication 1, **caractérisé en ce que** le premier élément profilé (5) est agencé pour recevoir le second élément profilé (6) ou vice versa.

9. Dispositif de levage et d'abaissement (1) pour supporter une charge selon une ou plusieurs des revendications précédentes, **caractérisé en ce que** chacun parmi le premier et le second élément profilé (5, 6), au niveau d'une extrémité, est raccordé avec un élément coulissant (11).

10. Dispositif de levage et d'abaissement (1) pour supporter une charge selon l'une quelconque des revendications 7 ou 9, **caractérisé en ce que** l'élément coulissant (11) comprend une première partie (11B) et une seconde partie (11A), dans lequel la première partie (11B) est raccordée à la seconde partie (11A) par le biais d'un raccordement à pivot (11C).

11. Dispositif de levage et d'abaissement (1) pour supporter une charge selon une ou plusieurs des revendications précédentes, **caractérisé en ce que** chacune parmi la première et la seconde poutre (2, 3) comprend un moyen de butée (44) pour le dispositif de commande.

12. Dispositif de levage et d'abaissement (1) pour supporter une charge selon une ou plusieurs des revendications 1 à 9, **caractérisé en ce que** le dispositif de levage et d'abaissement (1) comprend au moins un dispositif auxiliaire (124, 125, 126) se présentant sous la forme d'un (de) ressort (s) de torsion, d'un ou de plusieurs cylindres à gaz, d'un (de) ressort(s) spiral(s), d'un (de) moteur(s) ou similaires afin de faciliter la manipulation du dispositif de levage et d'abaissement (1).

13. Dispositif de levage et d'abaissement (1) pour supporter une charge selon une ou plusieurs des revendications précédentes, **caractérisé en ce que** le dispositif de levage et d'abaissement (1) comprend en outre au moins un dispositif de verrouillage (60, 61, 62, 141, 151, 161, 202) pour empêcher un déplacement involontaire.

14. Dispositif de levage et d'abaissement (1) pour supporter une charge selon une ou plusieurs des revendications précédentes, **caractérisé en ce que** « l'entretoise d'inclinaison » (7A) est raccordée, de manière pivotante, au premier élément profilé (5) et/ou aux entretoises (7).

15. Dispositif de levage et d'abaissement (1) pour supporter une charge selon une ou plusieurs des revendications précédentes, **caractérisé en ce que** le dispositif de levage et d'abaissement (1) comprend un dispositif de couplage avant et un dispositif de couplage arrière (130, 131).

16. Dispositif de levage et d'abaissement (1) pour supporter une charge selon une ou plusieurs des revendications précédentes, **caractérisé en ce que** le premier et le second élément profilé (5, 6) sont raccordés de manière rigide l'un par rapport à l'autre.

17. Système pour supporter une charge, **caractérisé en ce que** le système comprend un ou plusieurs dispositifs de levage et d'abaissement (1) pour supporter une charge selon l'une quelconque des revendications 1 à 16.
